(19) **Europäisches Patentamt**
**European Patent Office**
**Office européen des brevets**

(11) **EP 3 813 375 A1**

(12) **EUROPEAN PATENT APPLICATION**

(43) Date of publication:
**28.04.2021 Bulletin 2021/17**

(21) Application number: **20214703.9**

(22) Date of filing: **15.01.2018**

(51) Int Cl.:
*H04N 19/70* (2014.01)  *H04N 19/96* (2014.01)
*H04N 19/186* (2014.01)  *H04N 19/176* (2014.01)
*H04N 19/11* (2014.01)  *H04N 19/119* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2017 US 201762452868 P**
**28.02.2017 US 201762465135 P**
**03.03.2017 US 201762466976 P**
**29.03.2017 US 201762478362 P**
**28.04.2017 US 201762491884 P**

(62) Document number(s) of the earlier application(s) in accordance with Art. 76 EPC:
**18747366.5 / 3 577 898**

(71) Applicants:
• **Sharp Kabushiki Kaisha**
**Sakai-shi**
**Osaka 590-8522 (JP)**

• **FG Innovation Company Limited**
**Hong Kong (CN)**

(72) Inventors:
• **MISRA, Kiran Mukesh**
**Vancouver, WA Washington 98683 (US)**
• **ZHAO, Jie**
**Vancouver, WA Washington 98683 (US)**
• **SEGALL, Christopher Andrew**
**Vancouver, WA Washington 98683 (US)**

(74) Representative: **Müller Hoffmann & Partner**
**Patentanwälte mbB**
**St.-Martin-Strasse 58**
**81541 München (DE)**

Remarks:
This application was filed on 16-12-2020 as a divisional application to the application mentioned under INID code 62.

(54) **SYSTEMS AND METHODS FOR PARTITIONING A PICTURE INTO VIDEO BLOCKS FOR VIDEO CODING**

(57)    A method of determining partitioning of video data for video decoding and a device for the method are provided. A first partitioning structure is parsed. The first partitioning structure is determined based on more than one of a plurality of partitioning types. The first partitioning structure is applied to a first component of the video data. A shared depth is determined. The first partitioning structure is applied to a second component of the video data up to the shared depth.

[Fig. 11]

FIG. 11

**Description**

**Technical Field**

This disclosure relates to video coding and more particularly to techniques for partitioning a picture of video data.

**Background Art**

Digital video capabilities can be incorporated into a wide range of devices, including digital televisions, laptop or desktop computers, tablet computers, digital recording devices, digital media players, video gaming devices, cellular telephones, including so-called smartphones, medical imaging devices, and the like. Digital video may be coded according to a video coding standard. Video coding standards may incorporate video compression techniques. Examples of video coding standards include ISO/IEC MPEG-4 Visual and ITU-T H.264 (also known as ISO/IEC MPEG-4 AVC) and High-Efficiency Video Coding (HEVC). HEVC is described in High Efficiency Video Coding (HEVC), Rec. ITU-T H.265 April 2015, which is incorporated by reference, and referred to herein as ITU-T H.265. Extensions and improvements for ITU-T H.265 are currently being considered for development of next generation video coding standards. For example, the ITU-T Video Coding Experts Group (VCEG) and ISO/IEC (Moving Picture Experts Group (MPEG) (collectively referred to as the Joint Video Exploration Team (JVET)) are studying the potential need for standardization of future video coding technology with a compression capability that significantly exceeds that of the current HEVC standard. The Joint Exploration Model 3 (JEM 3), Algorithm Description of Joint Exploration Test Model 3 (JEM 3), ISO/IEC JTC1/SC29/WG11 Document: JVET-C1001v3, May 2016, Geneva, CH, which is incorporated by reference herein, describes the coding features that are under coordinated test model study by the JVET as potentially enhancing video coding technology beyond the capabilities of ITU-T H.265. It should be noted that the coding features of JEM 3 are implemented in JEM reference software maintained by the Fraunhofer research organization. Currently, the updated JEM reference software version 3 (JEM 3.0) is available. As used herein, the term JEM is used to collectively refer to algorithms included in JEM 3 and implementations of JEM reference software.

Video compression techniques enable data requirements for storing and transmitting video data to be reduced. Video compression techniques may reduce data requirements by exploiting the inherent redundancies in a video sequence. Video compression techniques may sub-divide a video sequence into successively smaller portions (i.e., groups of frames within a video sequence, a frame within a group of frames, slices within a frame, coding tree units (e.g., macroblocks) within a slice, coding blocks within a coding tree unit, etc.). Intra prediction coding techniques (e.g., intra-picture (spatial)) and inter prediction techniques (i.e., inter-picture (temporal)) may be used to generate difference values between a unit of video data to be coded and a reference unit of video data. The difference values may be referred to as residual data. Residual data may be coded as quantized transform coefficients. Syntax elements may relate residual data and a reference coding unit (e.g., intra-prediction mode indices, motion vectors, and block vectors). Residual data and syntax elements may be entropy coded. Entropy encoded residual data and syntax elements may be included in a compliant bitstream.

**Summary of Invention**

In one example, a method of partitioning video data for video coding, comprises receiving a video block including sample values for a first component of video data and a second component of video data, partitioning the sample values for the first component of video data according to a first quad tree binary tree partitioning structure, and partitioning the sample values for the second component of video data according to the first quad tree binary tree partitioning structure up to a shared depth.

In one example, a method of determining partitioning of video data for video coding, comprises parsing a first quad tree binary tree partitioning structure, applying the first quad tree binary tree partitioning structure to a first component of video data, determining a shared depth, and applying the first quad tree binary tree partitioning structure to a second component of video data up to the shared depth.

In one example, a method of partitioning a leaf node of video data for video coding, comprises determining an offset value and partitioning the leaf node according to the offset value.

In one example, a method of partitioning a node of video data for video coding, comprises determining a partitioning type, determining one or more offset values corresponding to the partitioning type, and partitioning the node according to the one or more offset values.

In one example, a method of partitioning a node of video data for video coding, comprises partitioning the node according to a diagonal partitioning shape, and determining a prediction mode for each of the partitions resulting from the diagonal partitioning shape.

## BRIEF DESCRIPTION OF THE DRAWINGS

[fig.1]FIG. 1 is a conceptual diagram illustrating an example of a group of pictures coded according to a quad tree binary tree partitioning in accordance with one or more techniques of this disclosure.

[fig.2]FIG. 2 is a conceptual diagram illustrating an example of a quad tree binary tree in accordance with one or more techniques of this disclosure.

[fig.3]FIG. 3 is a conceptual diagram illustrating video component quad tree binary tree partitioning in accordance with one or more techniques of this disclosure.

[fig.4]FIG. 4 is a conceptual diagram illustrating an example of a video component sampling format in accordance with one or more techniques of this disclosure.

[fig.5]FIG. 5 is a conceptual diagram illustrating possible coding structures for a block of video data according to one or more techniques of this disclosure.

[fig.6A]FIG. 6A is conceptual diagram illustrating examples of coding a block of video data in accordance with one or more techniques of this disclosure.

[fig.6B]FIG. 6B is conceptual diagram illustrating examples of coding a block of video data in accordance with one or more techniques of this disclosure.

[fig.7]FIG. 7 is a block diagram illustrating an example of a system that may be configured to encode and decode video data according to one or more techniques of this disclosure.

[fig.8]FIG. 8 is a block diagram illustrating an example of a video encoder that may be configured to encode video data according to one or more techniques of this disclosure.

[fig.9]FIG. 9 is a conceptual diagram illustrating video component quad tree binary tree partitioning in accordance with one or more techniques of this disclosure.

[fig.10]FIG. 10 is a conceptual diagram illustrating video component quad tree binary tree partitioning in accordance with one or more techniques of this disclosure.

[fig.11]FIG. 11 is a conceptual diagram illustrating an example of quad tree binary trees in accordance with one or more techniques of this disclosure.

[fig.12]FIG. 12 is a conceptual diagram illustrating quad tree binary tree partitioning in accordance with one or more techniques of this disclosure.

[fig.13]FIG. 13 is a conceptual diagram illustrating quad tree binary tree partitioning in accordance with one or more techniques of this disclosure.

[fig.14]FIG. 14 is a block diagram illustrating an example of a video decoder that may be configured to decode video data according to one or more techniques of this disclosure.

[fig.15]FIG. 15 is a conceptual diagram illustrating partitioning in accordance with one or more techniques of this disclosure.

[fig.16]FIG. 16 is a conceptual diagram illustrating partitioning in accordance with one or more techniques of this disclosure.

[fig.17]FIG. 17 is a conceptual diagram illustrating partitioning in accordance with one or more techniques of this disclosure.

[fig.18]FIG. 18 is a conceptual diagram illustrating partitioning in accordance with one or more techniques of this disclosure.

[fig.19A]FIG. 19A is a conceptual diagram illustrating partitioning in accordance with one or more techniques of this disclosure.

[fig.19B]FIG. 19B is a conceptual diagram illustrating partitioning in accordance with one or more techniques of this disclosure.

[fig.19C]FIG. 19C is a conceptual diagram illustrating partitioning in accordance with one or more techniques of this disclosure.

[fig.20]FIG. 20 is a conceptual diagram illustrating partitioning in accordance with one or more techniques of this disclosure.

[fig.21A]FIG. 21A is a conceptual diagram illustrating possible coding structures for a block of video data according to one or more techniques of this disclosure.

[fig.21B]FIG. 21B is a conceptual diagram illustrating possible coding structures for a block of video data according to one or more techniques of this disclosure.

[fig.22A]FIG. 22A is a conceptual diagram illustrating partitioning in accordance with one or more techniques of this disclosure.

[fig.22B]FIG. 22B is a conceptual diagram illustrating partitioning in accordance with one or more techniques of this disclosure.

[fig.22C]FIG. 22C is a conceptual diagram illustrating partitioning in accordance with one or more techniques of this disclosure.

[fig.22D]FIG. 22D is a conceptual diagram illustrating partitioning in accordance with one or more techniques of this disclosure.

[fig.23A]FIG. 23A is a conceptual diagram illustrating possible coding structures for a block of video data according to one or more techniques of this disclosure.

[fig.23B]FIG. 23B is a conceptual diagram illustrating possible coding structures for a block of video data according to one or more techniques of this disclosure.

[fig.23C]FIG. 23C is a conceptual diagram illustrating possible coding structures for a block of video data according to one or more techniques of this disclosure.

**Description of Embodiments**

In general, this disclosure describes various techniques for coding video data. In particular, this disclosure describes techniques for partitioning a picture of video data. It should be noted that although techniques of this disclosure are described with respect to ITU-T H.264, ITU-T H.265, and JEM, the techniques of this disclosure are generally applicable to video coding. For example, the coding techniques described herein may be incorporated into video coding systems, (including video coding systems based on future video coding standards) including block structures, intra prediction techniques, inter prediction techniques, transform techniques, filtering techniques, and/or entropy coding techniques other than those included in ITU-T H.265 and JEM. Thus, reference to ITU-T H.264, ITU-T H.265, and/or JEM is for descriptive purposes and should not be construed to limit the scope of the techniques described herein. Further, it should be noted that incorporation by reference of documents herein is for descriptive purposes and should not be construed to limit or create ambiguity with respect to terms used herein. For example, in the case where an incorporated reference provides a different definition of a term than another incorporated reference and/or as the term is used herein, the term should be interpreted in a manner that broadly includes each respective definition and/or in a manner that includes each of the particular definitions in the alternative.

In one example, a device for partitioning video data for video coding comprises one or more processors configured to receive a video block including sample values for a first component of video data and a second component of video data, partition the sample values for the first component of video data according to a first quad tree binary tree partitioning structure, and partition the sample values for the second component of video data according to the first quad tree binary tree partitioning structure up to a shared depth.

In one example, a non-transitory computer-readable storage medium comprises instructions stored thereon that, when executed, cause one or more processors of a device to receive a video block including sample values for a first component of video data and a second component of video data, partition the sample values for the first component of video data according to a first quad tree binary tree partitioning structure, and partition the sample values for the second component of video data according to the first quad tree binary tree partitioning structure up to a shared depth.

In one example, an apparatus comprises means for receiving a video block including sample values for a first component of video data and a second component of video data, means for partitioning the sample values for the first component of video data according to a first quad tree binary tree partitioning structure, and means for partitioning the sample values for the second component of video data according to the first quad tree binary tree partitioning structure up to a shared depth.

In one example, a method of reconstructing video data comprises parsing a first quad tree binary tree partitioning structure, applying the first quad tree binary tree partitioning structure to a first component of video data, determining a shared depth, and applying the first quad tree binary tree partitioning structure to a second component of video data up to the shared depth.

In one example, a device for reconstructing video data comprises one or more processors configured to parse a first quad tree binary tree partitioning structure, apply the first quad tree binary tree partitioning structure to a first component of video data, determine a shared depth, and apply the first quad tree binary tree partitioning structure to a second component of video data up to the shared depth.

In one example, a non-transitory computer-readable storage medium comprises instructions stored thereon that, when executed, cause one or more processors of a device to parse a first quad tree binary tree partitioning structure, apply the first quad tree binary tree partitioning structure to a first component of video data, determine a shared depth, and apply the first quad tree binary tree partitioning structure to a second component of video data up to the shared depth.

In one example, an apparatus comprises means for parsing a first quad tree binary tree partitioning structure, means for applying the first quad tree binary tree partitioning structure to a first component of video data, and means determining a shared depth, and means for applying the first quad tree binary tree partitioning structure to a second component of video data up to the shared depth.

In one example, a device for partitioning a leaf node of video data for video coding comprises one or more processors configured to determine an offset value and partition the leaf node according to the offset value.

In one example, a non-transitory computer-readable storage medium comprises instructions stored thereon that, when executed, cause one or more processors of a device to determine an offset value and partition the leaf node according to the offset value.

In one example, an apparatus comprises means for determining an offset value and means for partitioning the leaf node according to the offset value.

The details of one or more examples are set forth in the accompanying drawings and the description below. Other features, objects, and advantages will be apparent from the description and drawings, and from the claims.

Video content typically includes video sequences comprised of a series of frames (or pictures). A series of frames may also be referred to as a group of pictures (GOP). Each video frame or picture may include a plurality of slices or tiles, where a slice or tile includes a plurality of video blocks. As used herein, the term video block may generally refer to an area of a picture or may more specifically refer to the largest array of sample values that may be predictively coded, sub-divisions thereof, and/or corresponding structures. Further, the term current video block may refer to an area of a picture being encoded or decoded. A video block may be defined as an array of sample values that may be predictively coded. It should be noted that in some cases pixels values may be described as including sample values for respective components of video data, which may also be referred to as color components, (e.g., luma (Y) and chroma (Cb and Cr) components or red, green, and blue components). It should be noted that in some cases, the terms pixel values and sample values are used interchangeably. Video blocks may be ordered within a picture according to a scan pattern (e.g., a raster scan). A video encoder may perform predictive encoding on video blocks and sub-divisions thereof. Video blocks and sub-divisions thereof may be referred to as nodes.

ITU-T H.264 specifies a macroblock including 16x16 luma samples. That is, in ITU-T H.264, a picture is segmented into macroblocks. ITU-T H.265 specifies an analogous Coding Tree Unit (CTU) structure. In ITU-T H.265, pictures are segmented into CTUs. In ITU-T H.265, for a picture, a CTU size may be set as including 16x16, 32x32, or 64x64 luma samples. In ITU-T H.265, a CTU is composed of respective Coding Tree Blocks (CTB) for each component of video data (e.g., luma (Y) and chroma (Cb and Cr). Further, in ITU-T H.265, a CTU may be partitioned according to a quadtree (QT) partitioning structure, which results in the CTBs of the CTU being partitioned into Coding Blocks (CB). That is, in ITU-T H.265, a CTU may be partitioned into quadtree leaf nodes. According to ITU-T H.265, one luma CB together with two corresponding chroma CBs and associated syntax elements are referred to as a coding unit (CU). In ITU-T H.265, a minimum allowed size of a CB may be signaled. In ITU-T H.265, the smallest minimum allowed size of a luma CB is 8x8 luma samples. In ITU-T H.265, the decision to code a picture area using intra prediction or inter prediction is made at the CU level.

In ITU-T H.265, a CU is associated with a prediction unit (PU) structure having its root at the CU. In ITU-T H.265, PU structures allow luma and chroma CBs to be split for purposes of generating corresponding reference samples. That is, in ITU-T H.265, luma and chroma CBs may be split into respect luma and chroma prediction blocks (PBs), where a PB includes a block of sample values for which the same prediction is applied. In ITU-T H.265, a CB may be partitioned into 1, 2, or 4 PBs. ITU-T H.265 supports PB sizes from 64x64 samples down to 4x4 samples. In ITU-T H.265, square PBs are supported for intra prediction, where a CB may form the PB or the CB may be split into four square PBs (i.e., intra prediction PB types include MxM or M/2xM/2, where M is the height and width of the square CB). In ITU-T H.265, in addition to the square PBs, rectangular PBs are supported for inter prediction, where a CB may by halved vertically or horizontally to form PBs (i.e., inter prediction PB types include MxM, M/2xM/2, M/2xM, or MxM/2). Further, it should be noted that in ITU-T H.265, for inter prediction, four asymmetric PB partitions are supported, where the CB is partitioned into two PBs at one quarter of the height (at the top or the bottom) or width (at the left or the right) of the CB (i.e., asymmetric partitions include M/4xM left, M/4xM right, MxM/4 top, and MxM/4 bottom). Intra prediction data (e.g., intra prediction mode syntax elements) or inter prediction data (e.g., motion data syntax elements) corresponding to a PB is used to produce reference and/or predicted sample values for the PB.

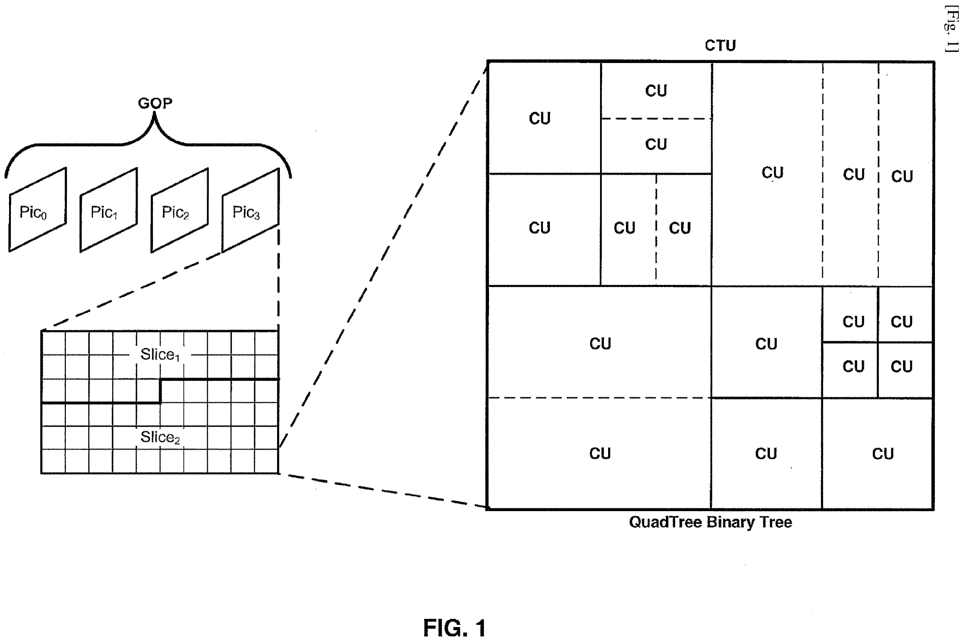

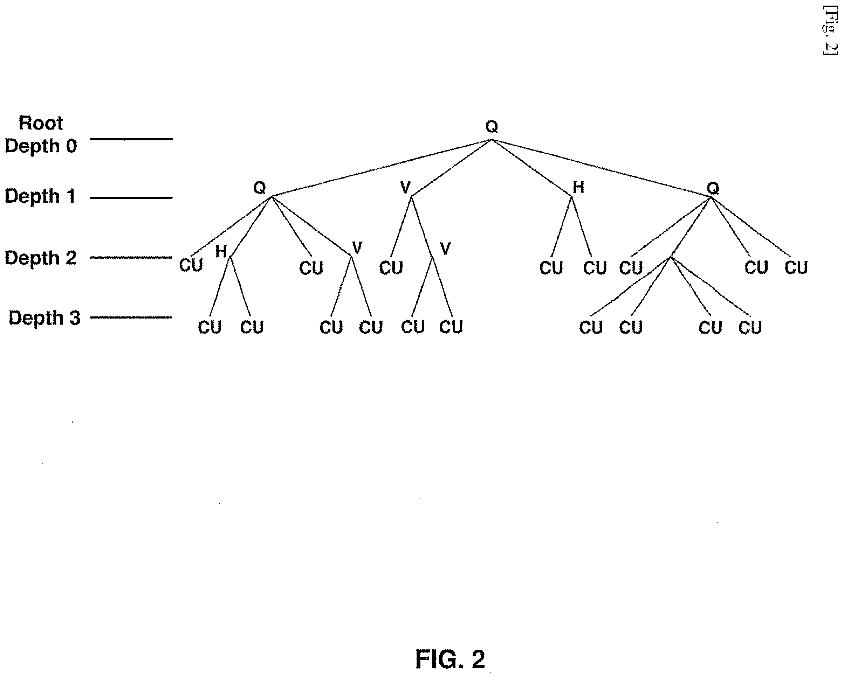

JEM specifies a CTU having a maximum size of 256x256 luma samples. JEM specifies a quadtree plus binary tree (QTBT) block structure. In JEM, the QTBT structure enables quadtree leaf nodes to be further partitioned by a binary tree (BT) structure. That is, in JEM, the binary tree structure enables quadtree leaf nodes to be recursively divided vertically or horizontally. FIG. 1 illustrates an example of a CTU (e.g., a CTU having a size of 256x256 luma samples) being partitioned into quadtree leaf nodes and quadtree leaf nodes being further partitioned according to a binary tree. That is, in FIG. 1 dashed lines indicate additional binary tree partitions in a quadtree. Thus, the binary tree structure in JEM enables square and rectangular leaf nodes, where each leaf node includes a CB. As illustrated in FIG. 1, a picture included in a GOP may include slices, where each slice includes a sequence of CTUs and each CTU may be partitioned according to a QTBT structure. FIG. 1 illustrates an example of QTBT partitioning for one CTU included in a slice. FIG. 2 is a conceptual diagram illustrating an example of a QTBT corresponding to the example QTBT partition illustrated in FIG. 1.

In JEM, a QTBT is signaled by signaling QT split flag and BT split mode syntax elements. When a QT split flag has a value of 1, a QT split is indicated. When a QT split flag has a value of 0, a BT split mode syntax element is signaled.

When a BT split mode syntax element has a value of 0 (i.e., BT split mode coding tree = 0), no binary splitting is indicated. When a BT split mode syntax element has a value of 1 (i.e., BT split mode coding tree = 11), a vertical split mode is indicated. When a BT split mode syntax element has a value of 2 (i.e., BT split mode coding tree = 10), a horizontal split mode is indicated. Further, BT splitting may be performed until a maximum BT depth is reached. Thus, according to JEM, the QTBT illustrated in FIG. 2 may be signaled based on the pseudo-syntax provided in Table 1:

Table 1

```
QT flag = 1; //Depth 0 syntax
    QT flag = 1; //Depth 1 syntax
        QT flag = 0, BT split = 0; //Depth 2 syntax
        QT flag = 0, BT split = 2; //Depth 2 syntax
            BT split = 0; //Depth 3 syntax
            BT split = 0; //Depth 3 syntax
        QT flag = 0, BT split = 0; //Depth 2 syntax
        QT flag = 0, BT split = 1; //Depth 2 syntax
            BT split = 0; //Depth 3 syntax
            BT split = 0; //Depth 3 syntax
    QT flag = 0; BT split = 1; //Depth 1 syntax
        BT split = 0; //Depth 2 syntax
        BT split = 1; //Depth 2 syntax
            BT split = 0; //Depth 3 syntax
            BT split = 0; //Depth 3 syntax
    QT flag = 0; BT split = 2; //Depth 1 syntax
        BT split = 0; //Depth 2 syntax
        BT split = 0; //Depth 2 syntax
    QT flag = 1; //Depth 1 syntax
        QT flag = 0, BT split = 0; //Depth 2 syntax
        QT flag = 1; //Depth 2 syntax
            QT flag = 0, BT split = 0; //Depth 3 syntax
            QT flag = 0, BT split = 0; //Depth 3 syntax
            QT flag = 0, BT split = 0; //Depth 3 syntax
            QT flag = 0, BT split = 0; //Depth 3 syntax
        QT flag = 0, BT split = 0; //Depth 2 syntax
        QT flag = 0, BT split = 0. //Depth 2 syntax
```

In one example, when a maximum QT depth is reached the signaling of QT flag may be skipped and its value may be inferred, e.g., as 0. In one example, when a current depth is smaller than a minimum QT depth, then the signaling of a QT flag may be skipped and its value may be inferred, e.g., as 1. In one example, when a maximum depth is reached for the signaling of a partition type, then the associated syntax element may not be signaled in the bitstream and its value may be inferred. In one example, when a minimum depth for the signaling of a partition type is not yet reached, then the associated syntax element may not be signaled in the bitstream and its value may be inferred. In one example, when no QT split is allowed and when current depth is smaller than minimum BT depth, then signaling of BT split may be modified to not allow BT split to equal 0.

In one example, following tree traversal may be used to signal the split decisions. For example:

1. Signal split decisions for current node
2. For i = 1 to the number of children of the current node (in steps of 1.) do the following:

   a. Determine child node n corresponding to i (this may be based on a lookup, that is based on a split mode of the current node)
   b. Traverse the subtree rooted at child node n calling the traversal function recursively.

In one example, following tree traversal may be used to signal the split decisions. For example:

1. For i = 1 to number of children of current node (in steps of 1) do the following:

    a. Determine child node n corresponding to i (this may be based on a lookup, that is based on a split mode of the current node)
    b. Traverse the subtree rooted at child node n calling the traversal function recursively
    c. Signal split decisions for current node.

In an example, following tree traversal may be used to signal the split decisions. For example:

1. For i = 1 to number of children of current node (in steps of 1) do the following:

    a. Determine child node n corresponding to i (this may be based on a lookup, that is based on a split mode of the current node)
    b. Traverse the subtree rooted at child node n calling the traversal function recursively

2. Signal split decisions for current node.

In one example, trees may be traversed in increasing depth. In such a case, all split decisions for nodes at a particular depth may be signaled before proceeding to the next depth.

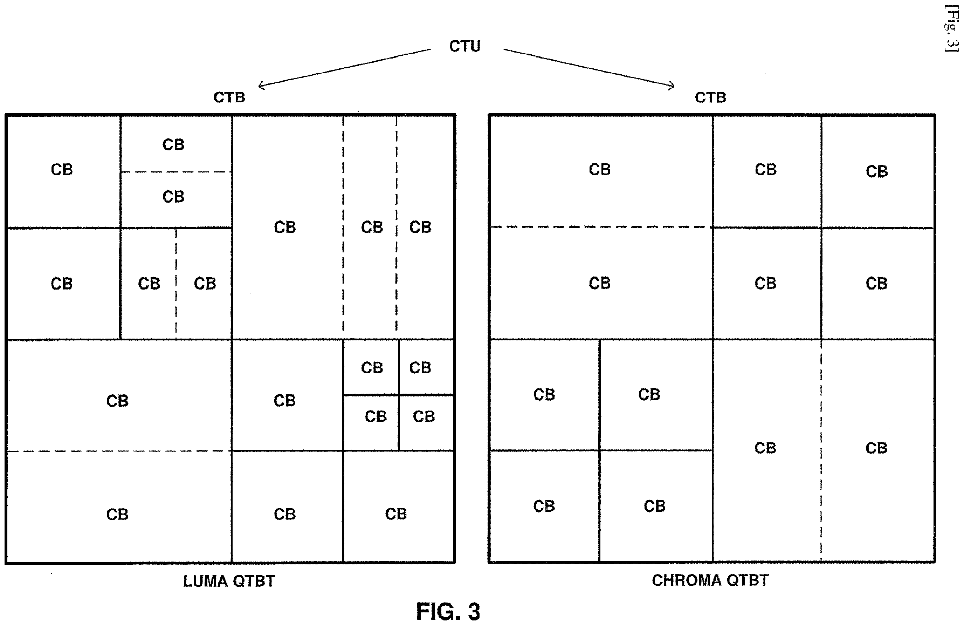

As illustrated in FIG. 2 and Table 1, QT split flag syntax elements and BT split mode syntax elements are associated with a depth, where a depth of zero corresponds to a root of a QTBT and higher value depths correspond to subsequent depths beyond the root. Further, in JEM, luma and chroma components may have separate QTBT partitions. That is, in JEM luma and chroma components may be partitioned independently by signaling respective QTBTs. FIG. 3 illustrates an example of a CTU being partitioned according to a QTBT for a luma component and an independent QTBT for chroma components. As illustrated in FIG. 3, when independent QTBTs are used for partitioning a CTU, CBs of the luma component are not required to and do not necessarily align with CBs of chroma components. Currently, in JEM independent QTBT structures are enabled for slices using intra prediction techniques. It should be noted that in some cases, values of chroma variables may need to be derived from the associated luma variable values. In these cases, the sample position in chroma and chroma format may be used to determine the corresponding sample position in luma to determine the associated luma variable value.

Additionally, it should be noted that JEM includes the following parameters for signaling of a QTBT tree:

CTU size: the root node size of a quadtree (e.g., 256x256, 128x128, 64x64, 32x32, 16x16 luma samples);
MinQTSize: the minimum allowed quadtree leaf node size (e.g., 16x16, 8x8 luma samples);
MaxBTSize: the maximum allowed binary tree root node size, i.e., the maximum size of a leaf quadtree node that may be partitioned by binary splitting (e.g., 64x64 luma samples);
MaxBTDepth: the maximum allowed binary tree depth, i.e., the lowest level at which binary splitting may occur, where the quadtree leaf node is the root (e.g., 3);
MinBTSize: the minimum allowed binary tree leaf node size; i.e., the minimum width or height of a binary leaf node (e.g., 4 luma samples).

It should be noted that in some examples, MinQTSize, MaxBTSize, MaxBTDepth, and/or MinBTSize may be different for the different components of video.

In JEM, CBs are used for prediction without any further partitioning. That is, in JEM, a CB may be a block of sample values on which the same prediction is applied. Thus, a JEM QTBT leaf node may be analogous a PB in ITU-T H.265.

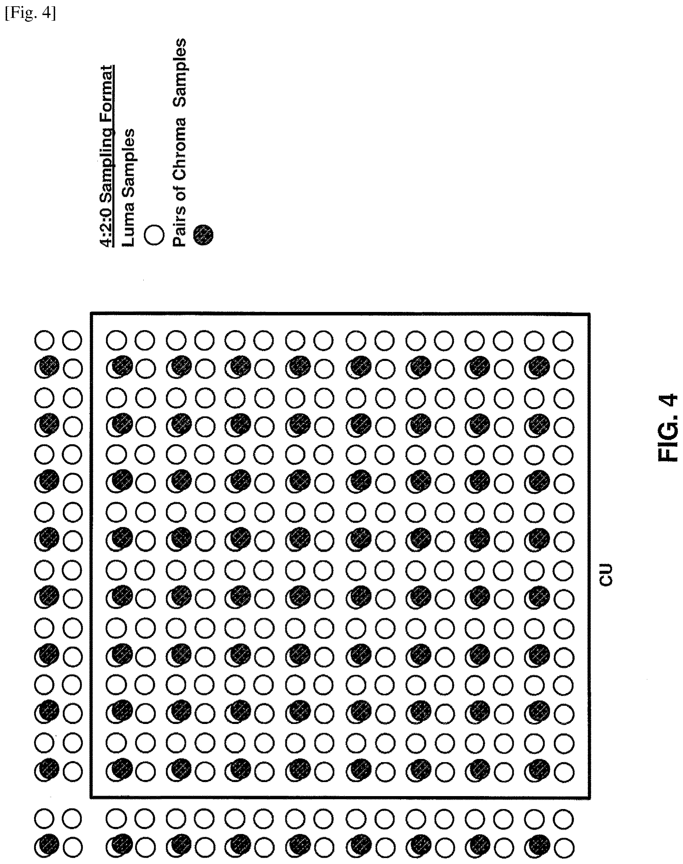

A video sampling format, which may also be referred to as a chroma format, may define the number of chroma samples included in a CU with respect to the number of luma samples included in a CU. For example, for the 4:2:0 sampling format, the sampling rate for the luma component is twice that of the chroma components for both the horizontal and vertical directions. As a result, for a CU formatted according to the 4:2:0 format, the width and height of an array of samples for the luma component are twice that of each array of samples for the chroma components. FIG. 4 is a conceptual diagram illustrating an example of a coding unit formatted according to a 4:2:0 sample format. FIG. 4 illustrates the relative position of chroma samples with respect to luma samples within a CU. As described above, a CU is typically defined according to the number of horizontal and vertical luma samples. Thus, as illustrated in FIG. 4, a 16x16 CU formatted according to the 4:2:0 sample format includes 16x16 samples of luma components and 8x8 samples for each chroma component. Further, in the example illustrated in FIG. 4, the relative position of chroma samples with respect to luma samples for video blocks neighboring the 16x16 CU are illustrated. For a CU formatted according to the 4:2:2 format, the width of an array of samples for the luma component is twice that of the width of an array of samples for each chroma component, but the height of the array of samples for the luma component is equal to the height of an array of samples for each chroma component. Further, for a CU formatted according to the 4:4:4 format, an array of samples for the luma component has the same width and height as an array of samples for each chroma component.

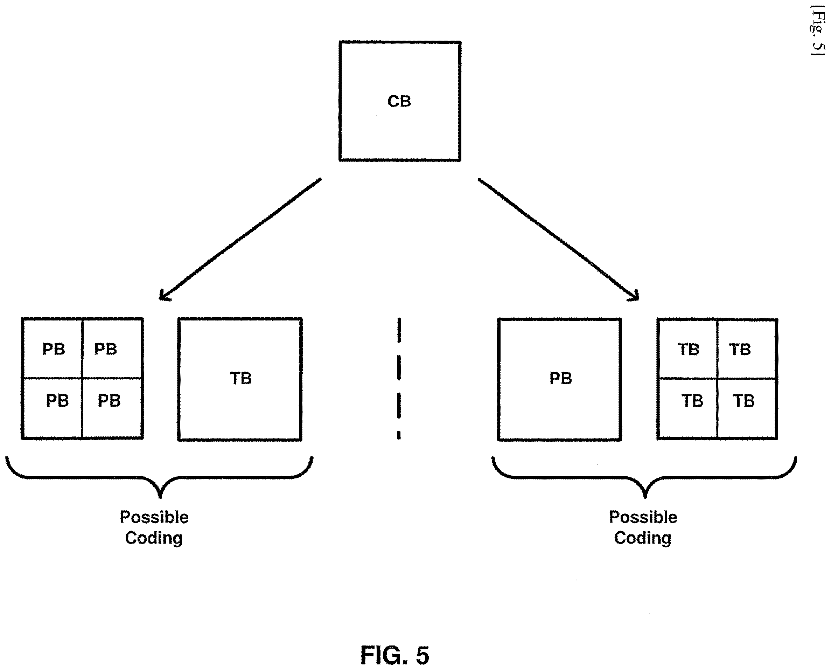

As described above, intra prediction data or inter prediction data is used to produce reference sample values for a block of sample values. The difference between sample values included in a current PB, or another type of picture area structure, and associated reference samples (e.g., those generated using a prediction) may be referred to as residual data. Residual data may include respective arrays of difference values corresponding to each component of video data. Residual data may be in the pixel domain. A transform, such as, a discrete cosine transform (DCT), a discrete sine transform (DST), an integer transform, a wavelet transform, or a conceptually similar transform, may be applied to an array of difference values to generate transform coefficients. It should be noted that in ITU-T H.265, a CU is associated with a transform unit (TU) structure having its root at the CU level. That is, in ITU-T H.265, an array of difference values may be sub-divided for purposes of generating transform coefficients (e.g., four 8x8 transforms may be applied to a 16x16 array of residual values). For each component of video data, such sub-divisions of difference values may be referred to as Transform Blocks (TBs). It should be noted that in ITU-T H.265, TBs are not necessarily aligned with PBs. FIG. 5 illustrates examples of alternative PB and TB combinations that may be used for coding a particular CB. Further, it should be noted that in ITU-T H.265, TBs may have the following sizes 4x4, 8x8, 16x16, and 32x32.

It should be noted that in JEM, residual values corresponding to a CB are used to generate transform coefficients without further partitioning. That is, in JEM a QTBT leaf node may be analogous to both a PB and a TB in ITU-T H.265. It should be noted that in JEM, a core transform and a subsequent secondary transforms may be applied (in the video encoder) to generate transform coefficients. For a video decoder, the order of transforms is reversed. Further, in JEM, whether a secondary transform is applied to generate transform coefficients may be dependent on a prediction mode.

A quantization process may be performed on transform coefficients. Quantization scales transform coefficients in order to vary the amount of data required to represent a group of transform coefficients. Quantization may include division of transform coefficients by a quantization scaling factor and any associated rounding functions (e.g., rounding to the nearest integer). Quantized transform coefficients may be referred to as coefficient level values. Inverse quantization (or "dequantization") may include multiplication of coefficient level values by the quantization scaling factor. It should be noted that as used herein the term quantization process in some instances may refer to division by a scaling factor to generate level values and multiplication by a scaling factor to recover transform coefficients in some instances. That is, a quantization process may refer to quantization in some cases and inverse quantization in some cases. Further, it should be noted that although in the examples below quantization processes are described with respect to arithmetic operations associated with decimal notation, such descriptions are for illustrative purposes and should not be construed as limiting. For example, the techniques described herein may be implemented in a device using binary operations and the like. For example, multiplication and division operations described herein may be implemented using bit shifting operations and the like.

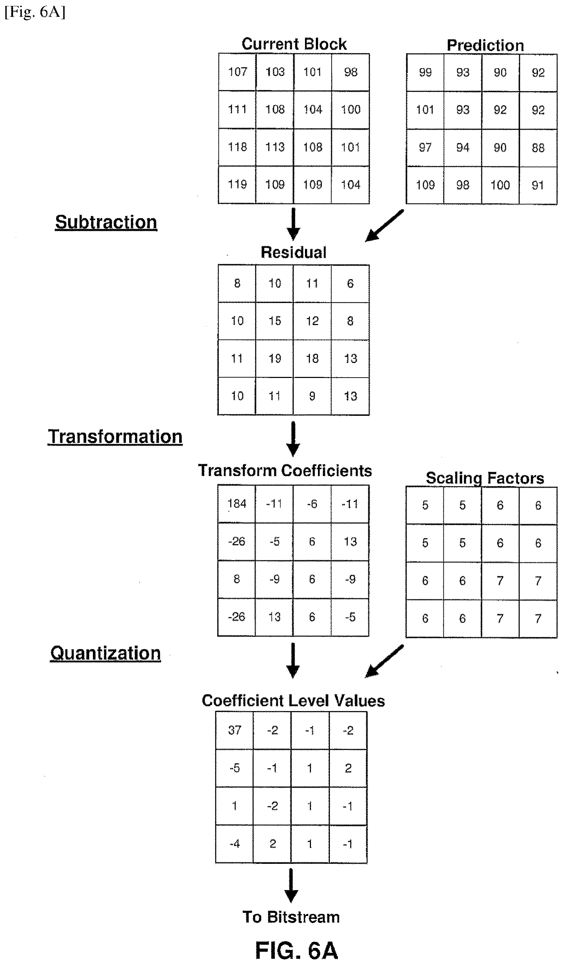

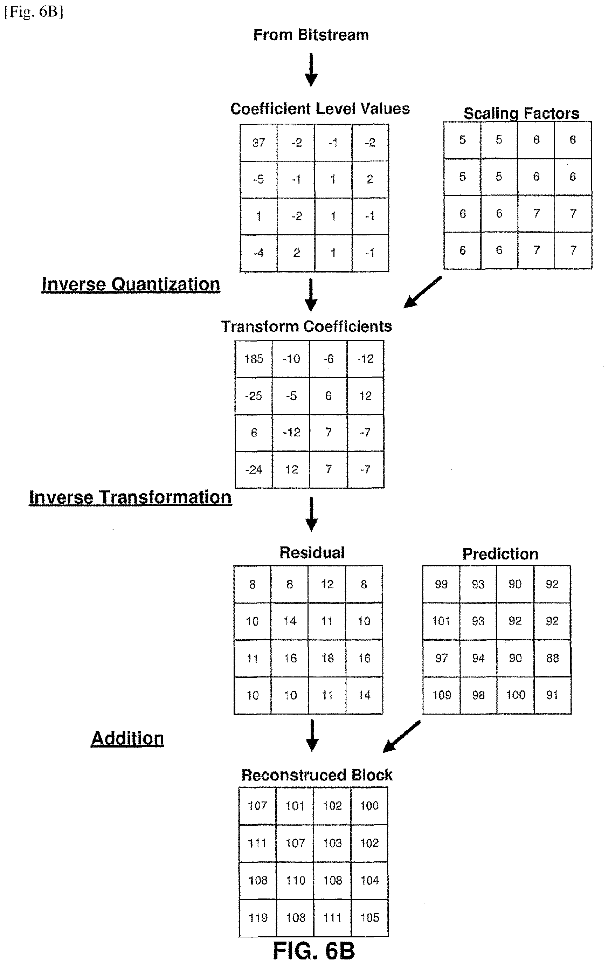

FIGS. 6A-6B are conceptual diagrams illustrating examples of coding a block of video data. As illustrated in FIG. 6A, a current block of video data (e.g., a CB corresponding to a video component) is encoded by generating a residual by subtracting a set of prediction values from the current block of video data, performing a transformation on the residual, and quantizing the transform coefficients to generate level values. As illustrated in FIG. 6B, the current block of video data is decoded by performing inverse quantization on level values, performing an inverse transform, and adding a set of prediction values to the resulting residual. It should be noted that in the examples in FIGS. 6A-6B, the sample values of the reconstructed block differs from the sample values of the current video block that is encoded. In this manner, coding may said to be lossy. However, the difference in sample values may be considered acceptable or imperceptible to a viewer of the reconstructed video. Further, as illustrated in FIGS. 6A-6B, scaling is performed using an array of scaling factors.

In ITU-T H.265, an array of scaling factors is generated by selecting a scaling matrix and multiplying each entry in the scaling matrix by a quantization scaling factor. In ITU-T H.265, a scaling matrix is selected based on a prediction mode and a color component, where scaling matrices of the following sizes are defined: 4x4, 8x8, 16x16, and 32x32. Thus, it should be noted that ITU-T H.265 does not define scaling matrices for sizes other than 4x4, 8x8, 16x16, and 32x32. In ITU-T H.265, the value of a quantization scaling factor, may be determined by a quantization parameter, QP. In ITU-T H.265, the QP can take 52 values from 0 to 51 and a change of 1 for QP generally corresponds to a change in the value of the quantization scaling factor by approximately 12%. Further, in ITU-T H.265, a QP value for a set of transform coefficients may be derived using a predictive quantization parameter value (which may be referred to as a predictive QP value or a QP predictive value) and an optionally signaled quantization parameter delta value (which may be referred to as a QP delta value or a delta QP value). In ITU-T H.265, a quantization parameter may be updated for each CU and a quantization parameter may be derived for each of luma (Y) and chroma (Cb and Cr) components.

As illustrated in FIG. 6A, quantized transform coefficients are coded into a bitstream. Quantized transform coefficients and syntax elements (e.g., syntax elements indicating a coding structure for a video block) may be entropy coded according to an entropy coding technique. Examples of entropy coding techniques include content adaptive variable length coding (CAVLC), context adaptive binary arithmetic coding (CABAC), probability interval partitioning entropy coding (PIPE), and the like. Entropy encoded quantized transform coefficients and corresponding entropy encoded syntax elements may form a compliant bitstream that can be used to reproduce video data at a video decoder. An entropy coding process may include performing a binarization on syntax elements. Binarization refers to the process of converting a value of a syntax value into a series of one or more bits. These bits may be referred to as "bins." Binarization is a lossless process and may include one or a combination of the following coding techniques: fixed length coding, unary coding, truncated unary coding, truncated Rice coding, Golomb coding, k-th order exponential Golomb coding, and Golomb-Rice coding. For example, binarization may include representing the integer value of 5 for a syntax element as 00000101 using an 8-bit fixed length binarization technique or representing the integer value of 5 as 11110 using a unary coding binarization technique. As used herein each of the terms fixed length coding, unary coding, truncated unary coding, truncated Rice coding, Golomb coding, k-th order exponential Golomb coding, and Golomb-Rice coding may refer to general implementations of these techniques and/or more specific implementations of these coding techniques. For example, a Golomb-Rice coding implementation may be specifically defined according to a video coding standard, for example, ITU-T H.265. An entropy coding process further includes coding bin values using lossless data compression algorithms. In the example of a CABAC, for a particular bin, a context model may be selected from a set of available context models associated with the bin. In some examples, a context model may be selected based on a previous bin and/or values of previous syntax elements. A context model may identify the probability of a bin having a particular value. For instance, a context model may indicate a 0.7 probability of coding a 0-valued bin and a 0.3 probability of coding a 1-valued bin. It should be noted that in some cases the probability of coding a 0-valued bin and probability of coding a 1-valued bin may not sum to 1. After selecting an available context model, a CABAC entropy encoder may arithmetically code a bin based on the identified context model. The context model may be updated based on the value of a coded bin. The context model may be updated based on an associated variable stored with the context, e.g., adaptation window size, number of bins coded using the context. It should be noted, that according to ITU-T H.265, a CABAC entropy encoder may be implemented, such that some syntax elements may be entropy encoded using arithmetic encoding without the usage of an explicitly assigned context model, such coding may be referred to as bypass coding.

As described above, intra prediction data or inter prediction data may associate an area of a picture (e.g., a PB or a CB) with corresponding reference samples. For intra prediction coding, an intra prediction mode may specify the location of reference samples within a picture. In ITU-T H.265, defined possible intra prediction modes include a planar (i.e., surface fitting) prediction mode (predMode: 0), a DC (i.e., flat overall averaging) prediction mode (predMode: 1), and 33 angular prediction modes (predMode: 2-34). In JEM, defined possible intra-prediction modes include a planar prediction mode (predMode: 0), a DC prediction mode (predMode: 1), and 65 angular prediction modes (predMode: 2-66). It should be noted that planar and DC prediction modes may be referred to as non-directional prediction modes and that angular prediction modes may be referred to as directional prediction modes. It should be noted that the techniques described herein may be generally applicable regardless of the number of defined possible prediction modes.

For inter prediction coding, a motion vector (MV) identifies reference samples in a picture other than the picture of a video block to be coded and thereby exploits temporal redundancy in video. For example, a current video block may be predicted from reference block(s) located in previously coded frame(s) and a motion vector may be used to indicate the location of the reference block. A motion vector and associated data may describe, for example, a horizontal component of the motion vector, a vertical component of the motion vector, a resolution for the motion vector (e.g., one-quarter pixel precision, one-half pixel precision, one-pixel precision, two-pixel precision, four-pixel precision), a prediction direction and/or a reference picture index value. Further, a coding standard, such as, for example ITU-T H.265, may support motion vector prediction. Motion vector prediction enables a motion vector to be specified using motion vectors of neighboring blocks. Examples of motion vector prediction include advanced motion vector prediction (AMVP), temporal motion vector prediction (TMVP), so-called "merge" mode, and "skip" and "direct" motion inference. Further, JEM supports advanced temporal motion vector prediction (ATMVP) and Spatial-temporal motion vector prediction (STMVP).

As described above, in JEM, a QTBT leaf node, which allows for arbitrary rectangular CBs, may be analogous to both a PB and a TB in ITU-T H.265. Thus, is some cases, JEM may provide less flexibility with respect to possible PB and TB structures than as provided in ITU-T H.265. As further described above, in ITU-T H.265, only square TBs are allowed and only square PBs are allowed for intra prediction. Thus, some processes in ITU-T H.265 are defined based on the assumption that an array of sample values input to the process must be square and as such, some processes in ITU-T H.265 may not provide adequate support for coding arbitrary rectangular video blocks. Further, QTBT partitioning and associated signaling as defined in JEM may be less than ideal. This disclosure describes techniques for performing video coding using arbitrary rectangular video blocks.

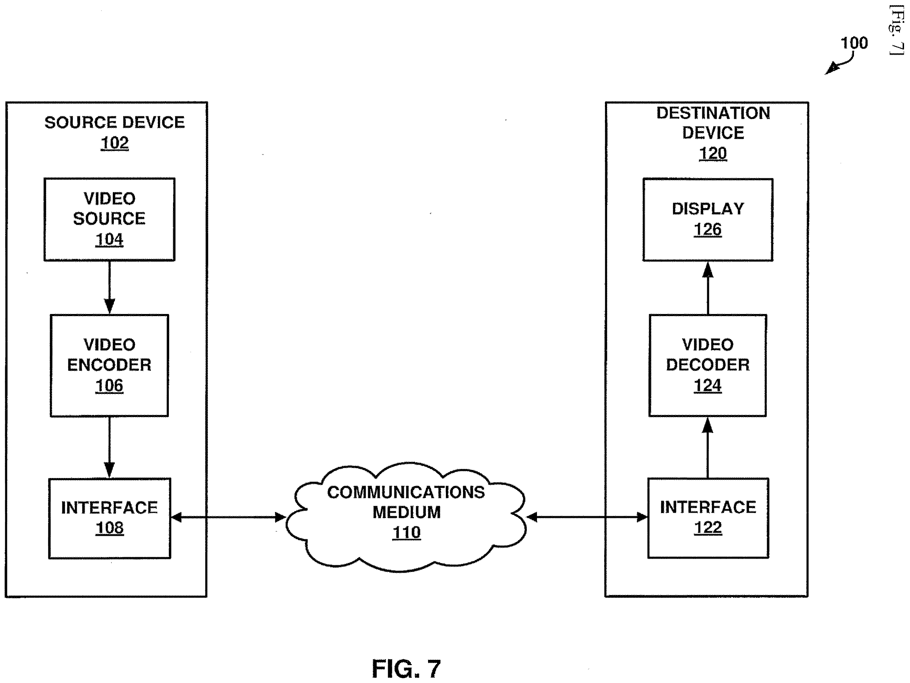

FIG. 7 is a block diagram illustrating an example of a system that may be configured to code (i.e., encode and/or decode) video data according to one or more techniques of this disclosure. System 100 represents an example of a system that may perform video coding using arbitrary rectangular video blocks according to one or more techniques of this disclosure. As illustrated in FIG. 1, system 100 includes source device 102, communications medium 110, and destination device 120. In the example illustrated in FIG. 1, source device 102 may include any device configured to encode video data and transmit encoded video data to communications medium 110. Destination device 120 may include any device configured to receive encoded video data via communications medium 110 and to decode encoded video data. Source device 102 and/or destination device 120 may include computing devices equipped for wired and/or wireless communications and may include set top boxes, digital video recorders, televisions, desktop, laptop, or tablet computers, gaming consoles, mobile devices, including, for example, "smart" phones, cellular telephones, personal gaming devices, and medical imagining devices.

Communications medium 110 may include any combination of wireless and wired communication media, and/or storage devices. Communications medium 110 may include coaxial cables, fiber optic cables, twisted pair cables, wireless transmitters and receivers, routers, switches, repeaters, base stations, or any other equipment that may be useful to facilitate communications between various devices and sites. Communications medium 110 may include one or more networks. For example, communications medium 110 may include a network configured to enable access to the World Wide Web, for example, the Internet. A network may operate according to a combination of one or more telecommunication protocols. Telecommunications protocols may include proprietary aspects and/or may include standardized telecommunication protocols. Examples of standardized telecommunications protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, Global System Mobile Communications (GSM) standards, code division multiple access (CDMA) standards, 3rd Generation Partnership Project (3GPP) standards, European Telecommunications Standards Institute (ETSI) standards, Internet Protocol (IP) standards, Wireless Application Protocol (WAP) standards, and Institute of Electrical and Electronics Engineers (IEEE) standards.

Storage devices may include any type of device or storage medium capable of storing data. A storage medium may include a tangible or non-transitory computer-readable media. A computer readable medium may include optical discs, flash memory, magnetic memory, or any other suitable digital storage media. In some examples, a memory device or portions thereof may be described as non-volatile memory and in other examples portions of memory devices may be described as volatile memory. Examples of volatile memories may include random access memories (RAM), dynamic random access memories (DRAM), and static random access memories (SRAM). Examples of non-volatile memories may include magnetic hard discs, optical discs, floppy discs, flash memories, or forms of electrically programmable memories (EPROM) or electrically erasable and programmable (EEPROM) memories. Storage device(s) may include memory cards (e.g., a Secure Digital (SD) memory card), internal/external hard disk drives, and/or internal/external solid state drives. Data may be stored on a storage device according to a defined file format.

Referring again to FIG. 1, source device 102 includes video source 104, video encoder 106, and interface 108. Video source 104 may include any device configured to capture and/or store video data. For example, video source 104 may include a video camera and a storage device operably coupled thereto. Video encoder 106 may include any device configured to receive video data and generate a compliant bitstream representing the video data. A compliant bitstream may refer to a bitstream that a video decoder can receive and reproduce video data therefrom. Aspects of a compliant bitstream may be defined according to a video coding standard. When generating a compliant bitstream video encoder 106 may compress video data. Compression may be lossy (discernible or indiscernible) or lossless. Interface 108 may include any device configured to receive a compliant video bitstream and transmit and/or store the compliant video bitstream to a communications medium. Interface 108 may include a network interface card, such as an Ethernet card, and may include an optical transceiver, a radio frequency transceiver, or any other type of device that can send and/or receive information. Further, interface 108 may include a computer system interface that may enable a compliant video bitstream to be stored on a storage device. For example, interface 108 may include a chipset supporting Peripheral Component Interconnect (PCI) and Peripheral Component Interconnect Express (PCIe) bus protocols, proprietary bus protocols, Universal Serial Bus (USB) protocols, I2C, or any other logical and physical structure that may be used to interconnect peer devices.

Referring again to FIG. 1, destination device 120 includes interface 122, video decoder 124, and display 126. Interface 122 may include any device configured to receive a compliant video bitstream from a communications medium. Interface 108 may include a network interface card, such as an Ethernet card, and may include an optical transceiver, a radio frequency transceiver, or any other type of device that can receive and/or send information. Further, interface 122 may include a computer system interface enabling a compliant video bitstream to be retrieved from a storage device. For example, interface 122 may include a chipset supporting PCI and PCIe bus protocols, proprietary bus protocols, USB protocols, I2C, or any other logical and physical structure that may be used to interconnect peer devices. Video decoder 124 may include any device configured to receive a compliant bitstream and/or acceptable variations thereof and reproduce video data therefrom. Display 126 may include any device configured to display video data. Display 126 may comprise one of a variety of display devices such as a liquid crystal display (LCD), a plasma display, an organic light emitting diode (OLED) display, or another type of display. Display 126 may include a High Definition display or an Ultra High Definition display. It should be noted that although in the example illustrated in FIG. 7, video decoder 124 is described as outputting data to display 126, video decoder 124 may be configured to output video data to various types of devices and/or sub-components thereof. For example, video decoder 124 may be configured to output video data to any communication medium, as described herein.

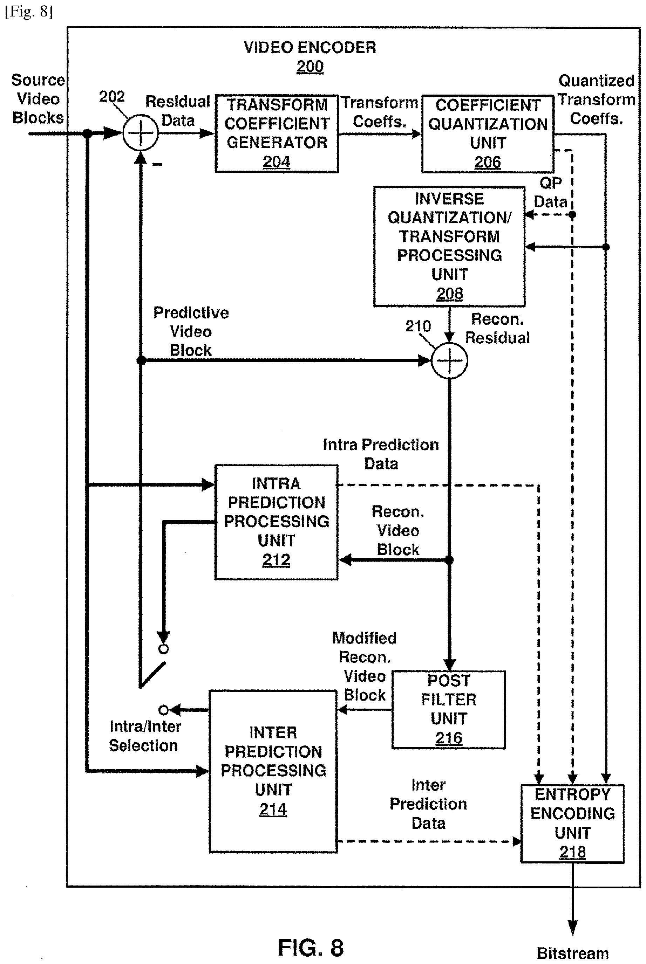

FIG. 8 is a block diagram illustrating an example of video encoder 200 that may implement the techniques for encoding video data described herein. It should be noted that although example video encoder 200 is illustrated as having distinct functional blocks, such an illustration is for descriptive purposes and does not limit video encoder 200 and/or sub-components thereof to a particular hardware or software architecture. Functions of video encoder 200 may be realized using any combination of hardware, firmware, and/or software implementations. In one example, video encoder 200 may be configured to encode video data according to the techniques described herein. Video encoder 200 may perform intra prediction coding and inter prediction coding of picture areas, and, as such, may be referred to as a hybrid video encoder. In the example illustrated in FIG. 8, video encoder 200 receives source video blocks. In some examples, source video blocks may include areas of picture that has been divided according to a coding structure. For example, source video data may include macroblocks, CTUs, CBs, sub-divisions thereof, and/or another equivalent coding unit. In some examples, video encoder 200 may be configured to perform additional sub-divisions of source video blocks. It should be noted that some techniques described herein may be generally applicable to video coding, regardless of how source video data is partitioned prior to and/or during encoding. In the example illustrated in FIG. 8, video encoder 200 includes summer 202, transform coefficient generator 204, coefficient quantization unit 206, inverse quantization/transform processing unit 208, summer 210, intra prediction processing unit 212, inter prediction processing unit 214, post filter unit 216, and entropy encoding unit 218.

As illustrated in FIG. 8, video encoder 200 receives source video blocks and outputs a bitstream. As described above, JEM includes the following parameters for signaling of a QTBT tree: CTU size, MinQTSize, MaxBTSize, MaxBTDepth, and MinBTSize. Table 2 illustrates block sizes of QT leaf nodes at various QT depths for different CTU sizes (in the example, MinQTSize is 8). Further, Table 3 illustrates allowed block sizes of BT leaf nodes at various BT depths for binary tree root node sizes (i.e., leaf quadtree node sizes).

Table 2

|  |  | CTU size | | | | |
|---|---|---|---|---|---|---|
|  |  | **256x256** | **128x128** | **64x64** | **32x32** | **16x16** |
| **QT Depth** | 0 | 256x256 | 128x128 | 64x64 | 32x32 | 16x16 |
|  | 1 | 128x128 | 64x64 | 32x32 | 16x16 | 8x8 |
|  | 2 | 64x64 | 32x32 | 16x16 | 8x8 |  |
|  | 3 | 32x32 | 16x16 | 8x8 |  |  |
|  | 4 | 16x16 | 8x8 |  |  |  |
|  | 5 | 8x8 |  |  |  |  |

Table 3

|  |  | **Block Size of QT leaf CB** | | | | |
|---|---|---|---|---|---|---|
|  |  | **128x128** | **64x64** | **32x32** | **16x16** | **8x8** |
| **BT depth** | 1 | 128x64<br>64x128 | 64x32<br>32x64 | 32x16<br>16x32 | 16x8<br>8x16 | 8x4<br>4x8 |
|  | 2 | 64x64<br>128x32<br>32x128 | 32x32<br>64x16<br>16x64 | 16x16<br>32x8<br>8x32 | 8x8<br>16x4<br>4x16 | 4x4<br>8x2<br>2x8 |
|  | 3 | 64x32<br>32x64<br>128x16<br>16x128 | 32x16<br>16x32<br>64x8<br>8x32 | 8x16<br>16x8<br>32x4<br>4x32 | 8x4<br>4x8<br>16x2<br>2x16 |  |

Thus, referring to Table 2, the quadtree node size, which forms the root of the binary tree, may be determined based on CTU size and a QT Depth. If the quadtree is further split into binary trees, then binary tree leaf node sizes may be determined based on QT node size and BT depth, as illustrated in Table 3. Each of MaxBTSize, MaxBTDepth, and MinBTSize may be used to determine a minimum allowed binary tree leaf node size. For example, if CTU size is 128x128, QT Depth is 3, MaxBTSize is 16x16, and MaxBTDepth is 2, the minimum allowed binary tree leaf node size includes 64 samples (i.e., 8x8, 16x4, or 4x16). In this case, if MaxBTDepth is 1, the minimum allowed binary tree leaf node size includes 128 samples (i.e., 16x8 or 8x16). Table 4 illustrates block sizes of BT leaf nodes at various combinations of QT depths and BT depths for a CTU size of 128x128.

Table 4

| | | QT Depth | | | | |
|---|---|---|---|---|---|---|
| | | **0** | **1** | **2** | **3** | **4** |
| **BT Depth** | **0** | 128x128 | 64x64 | 32x32 | 16x16 | 8x8 |
| | **1** | 128x64<br>64x128 | 64x32<br>32x64 | 32x16<br>16x32 | 16x8<br>8x16 | 8x4<br>4x8 |
| | **2** | 64x64<br>128x32<br>32x128 | 32x32<br>64x16<br>16x64 | 16x16<br>32x8<br>8x32 | 8x8<br>16x4<br>4x16 | 4x4<br>8x2<br>2x8 |
| | **3** | 64x32<br>32x64<br>128x16<br>16x128 | 32x16<br>16x32<br>64x8<br>8x32 | 8x16<br>16x8<br>32x4<br>4x32 | 8x4<br>4x8<br>16x2<br>2x16 | |

As described above, QTBT partitioning and associated signaling as defined in JEM may be less than ideal. For example, as described above with respect to FIG. 3, in JEM, when independent QTBTs are used for partitioning a CTU, CBs of the luma component are not required to and do not necessarily align with CBs of chroma components. That is, in JEM when independent QTBTs are used for partitioning a CTU, each of the luma component and the chroma component partitions is signaled using separate sets of QT split flag and BT split mode syntax elements, such signaling may be less than ideal.

In some examples, according to the techniques described herein, video encoder 200 may be configured to partition CTUs such that luma and chroma components have a common partitioning structure up to a particular depth and thus share a common set of QT split flag and BT split mode syntax elements up to the particular depth. It should be noted that in this case, depth may correspond to an absolute depth of a QTBT, (i.e., a depth formed by the sum of QT depth and BT depth). It should be noted that in some cases, depth may correspond to a number of samples of a component (e.g., luma and/or chroma) in a block and optionally may be indicated according to a minimum width and/or minimum height. For example, a QTBT may be shared until an array of chroma samples is partitioned to a particular size. For example, a QTBT may be shared until one of the height or width of a node is less than a specified number of samples for a component, e.g., 8 samples. For example, a QTBT may be shared until number of samples of a component (e.g. luma and/or chroma) for a node is less than a specified number, e.g., 64. In one example, the depth may be predetermined for a set of CTUs. For example, the depth may be set at 2 for a slice of video data, or for example, set at 2 for a picture of video data. In one example, the depth may be signaled using a syntax element (e.g., shared_depth or the like). In one example, a shared depth syntax element may be signaled at the CTU-level. In one example, a shared depth syntax element may be signaled at the slice-level. In one example, a shared depth syntax element may be signaled at a parameter-set level (e.g., a Picture Parameter set (PPS) or a Sequence Parameter Set (SPS)). In one example, a higher level flag may be used to indicate the presence of a shared depth syntax element at a lower level. For example, a syntax element included at the slice level may indicate whether a shared depth syntax element is included for each CTU included in the slice. It should be noted that in a similar manner, a CTU level flag may be used to indicate that one or more of shared QTBTs, partially shared QTBTs, or independent QTBTs for luma and chroma components.

In one example, a shared depth syntax element may be a flag at a split-level. For example, for each QT split flag and/or BT split mode, a respective flag may indicate whether the split indicated is shared. In one example, a shared depth may be set using a shared depth syntax element at a high level and a lower level flag may be used to indicate sharing beyond the level specified by the syntax element. For example, a shared depth may be set at the slice level as a depth of 1 and each CTU within the slice may include a flag indicating whether for the particular CTU sharing is extended beyond a depth of 1 to a depth of 2.

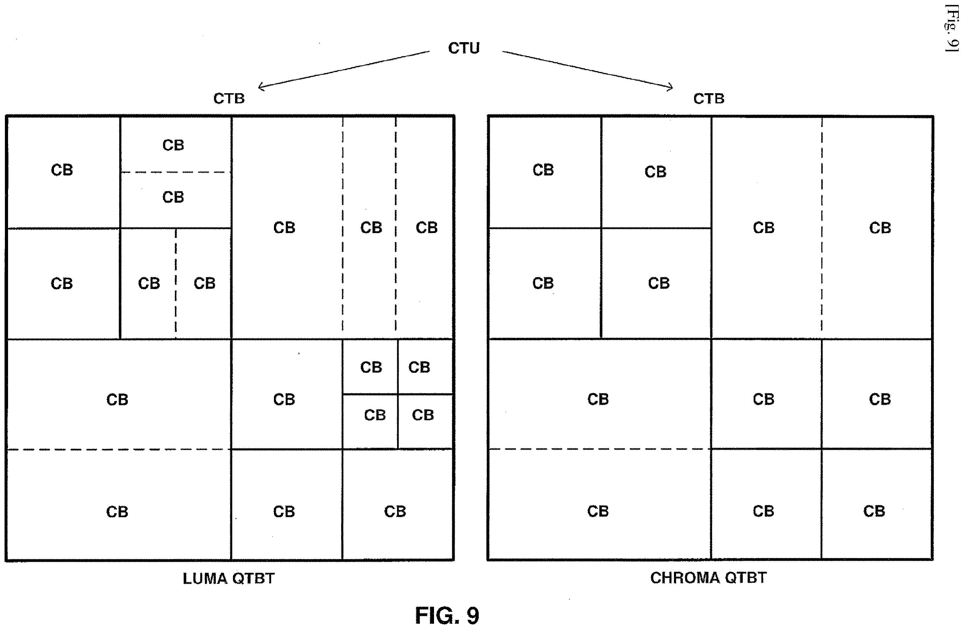

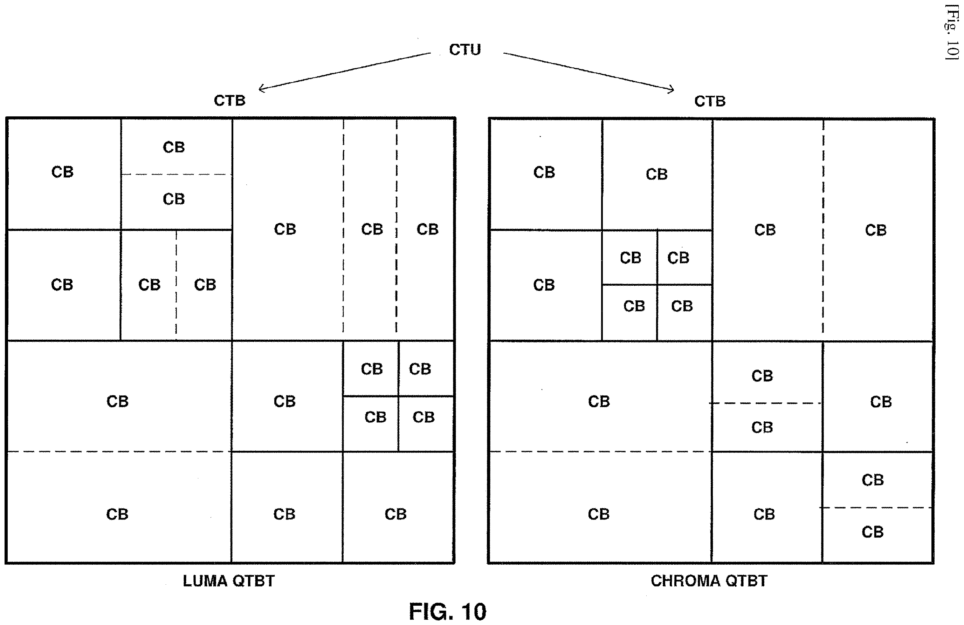

FIG. 9 and FIG. 10 are conceptual diagrams illustrating an example where luma and chroma components have a common partitioning up to a shared depth. In the example illustrated in FIG. 9, the luma component is additionally partitioned beyond the shared depth of 1 and the chroma components are not partitioned beyond depth 1. In the example illustrated in FIG. 10, both the luma component and the chroma component are independently partitioned beyond the shared depth of 1. As described above, a video sampling format may define the number of chroma samples included in a CU with respect to the number of luma samples included in a CU. In one example, video encoder 200 may be configured to selectively partition the chroma components beyond a shared depth based on a sampling format. For example, in the case where a CTU is formatted according to a 4:2:0 sample format, in one example, video encoder 200 may be configured such that the chroma components may not be further partitioned beyond the shared depth. Further, in the case where a CTU is formatted according to a 4:4:4 sample format, in one example, video encoder 200 may be configured such that the chroma components may be further partitioned beyond the shared depth. Further, in addition, or as an alternative to a sampling format, one or more of: CTU size, MinQTSize, MaxBTSize, MaxBTDepth, and/or MinBTSize may be used to determine whether the chroma components are allowed to be partitioned beyond the shared depth.

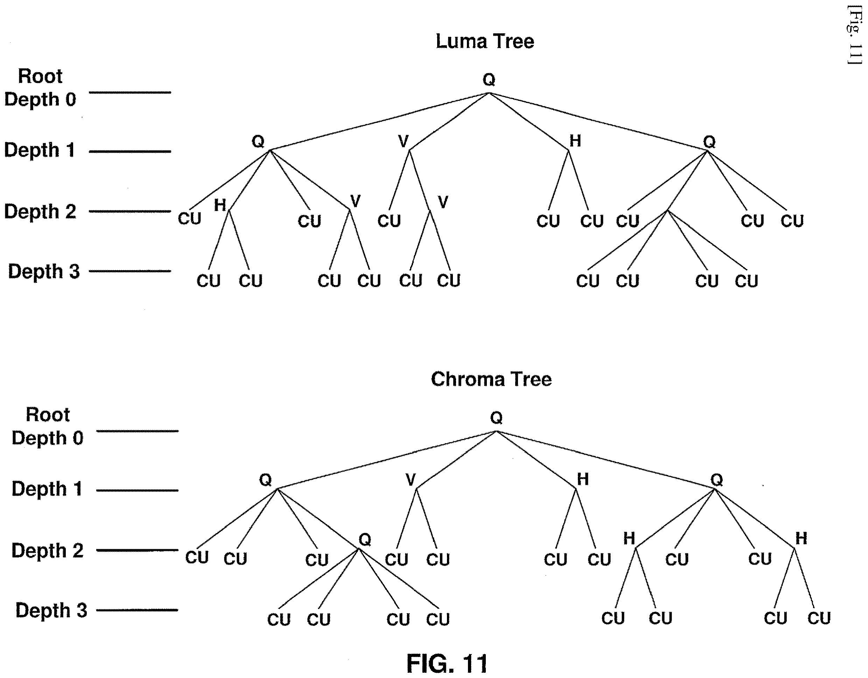

FIG. 11 is a conceptual diagram illustrating an example of QTBTs corresponding to the example QTBT partitions illustrated in FIG. 10. As illustrated in FIG. 11, the QTBT for luma and QTBT for chroma are the same up to depth 1, i.e., the shared depth is 1. Further, it should be noted that the luma tree illustrated in FIG. 11, for purposes of explanation, is the same as the QTBT illustrated in FIG. 2. As such, for the example illustrated in FIG. 11, video encoder 200 may be configured to signal the luma QTBT based on the pseudo-syntax provided in Table 1. In one example, video encoder 200 may be configured to signal the chroma QTBT beyond the shared QTBT based on the pseudo-syntax provided in Table 5.

Table 5

```
//Depth 0 and Depth 1 for chroma derived from Table 1 syntax
    If additional partitioning condition ==TRUE:
        QT flag = 0, BT split = 0; //Depth 2 syntax chroma
        QT flag = 0, BT split = 0; //Depth 2 syntax chroma
        QT flag = 0, BT split = 0; //Depth 2 syntax chroma
        QT flag = 1; //Depth 2 syntax chroma
            QT flag = 0, BT split = 0; //Depth 3 syntax chroma
            QT flag = 0, BT split = 0; //Depth 3 syntax chroma
            QT flag = 0, BT split = 0; //Depth 3 syntax chroma
            QT flag = 0, BT split = 0; //Depth 3 syntax chroma
        QT flag = 0, BT split = 0; //Depth 2 syntax chroma
        QT flag = 0, BT split = 0; //Depth 2 syntax chroma
        QT flag = 0, BT split = 0; //Depth 2 syntax chroma
        QT flag = 0, BT split = 0; //Depth 2 syntax chroma
        QT flag = 0, BT split = 2. //Depth 2 syntax chroma
            QT flag = 0, BT split = 0; //Depth 3 syntax chroma
            QT flag = 0, BT split = 0; //Depth 3 syntax chroma
        QT flag = 0, BT split = 0; //Depth 2 syntax chroma
        QT flag = 0, BT split = 0. //Depth 2 syntax chroma
        QT flag = 0, BT split = 2. //Depth 2 syntax chroma
            QT flag = 0, BT split = 0; //Depth 3 syntax chroma
            QT flag = 0, BT split = 0; //Depth 3 syntax chroma
```

In the example illustrated in Table 5, the addition partitioning condition may include a condition based on one or more of: sampling format, CTU size, MinQTSize, MaxBTSize, MaxBTDepth, and/or MinBTSize, as described above. It should be noted that in one example, video encoder 200 may be configured to signal the chroma QTBT beyond the shared QTBT by multiplexing the syntax elements illustrated in Table 1 and Table 5. For example, syntax elements for the chroma component nodes beyond the shared node and those which are descendants of the shared node may be signaled after syntax elements for the luma component nodes beyond the shared node and those which are descendants of the shared node. Table 6 illustrates an example of pseudo-syntax where syntax elements for the chroma components are signaled after syntax elements terminating the shared node into leaf nodes for the luma component. In one example, chroma syntax elements may be signaled before the luma syntax elements.

Table 6

```
QT flag = 1; //Depth 0 syntax
    QT flag = 1; //Depth 1 syntax
        QT flag = 0, BT split = 0; //Depth 2 syntax luma
        QT flag = 0, BT split = 2; //Depth 2 syntax luma
            BT split = 0; //Depth 3 syntax luma
            BT split = 0; //Depth 3 syntax luma
        QT flag = 0, BT split = 0; //Depth 2 syntax luma
        QT flag = 0, BT split = 1; //Depth 2 syntax luma
            BT split = 0; //Depth 3 syntax luma
            BT split = 0; //Depth 3 syntax luma
        QT flag = 0, BT split = 0; //Depth 2 syntax chroma
        QT flag = 0, BT split = 0; //Depth 2 syntax chroma
        QT flag = 0, BT split = 0; //Depth 2 syntax chroma
        QT flag = 1; //Depth 2 syntax chroma
            QT flag = 0, BT split = 0; //Depth 3 syntax chroma
            QT flag = 0, BT split = 0; //Depth 3 syntax chroma
            QT flag = 0, BT split = 0; //Depth 3 syntax chroma
            QT flag = 0, BT split = 0; //Depth 3 syntax chroma

...
```

In this manner, video encoder 200 represents an example of a device configured to receive a video block including sample values for a first component of video data and second component of video data, partition the sample values for the first component of video data according to a first quad tree binary tree partitioning structure, and partition the sample values for the second component of video data according to the first quad tree binary tree partitioning structure up to a shared depth.

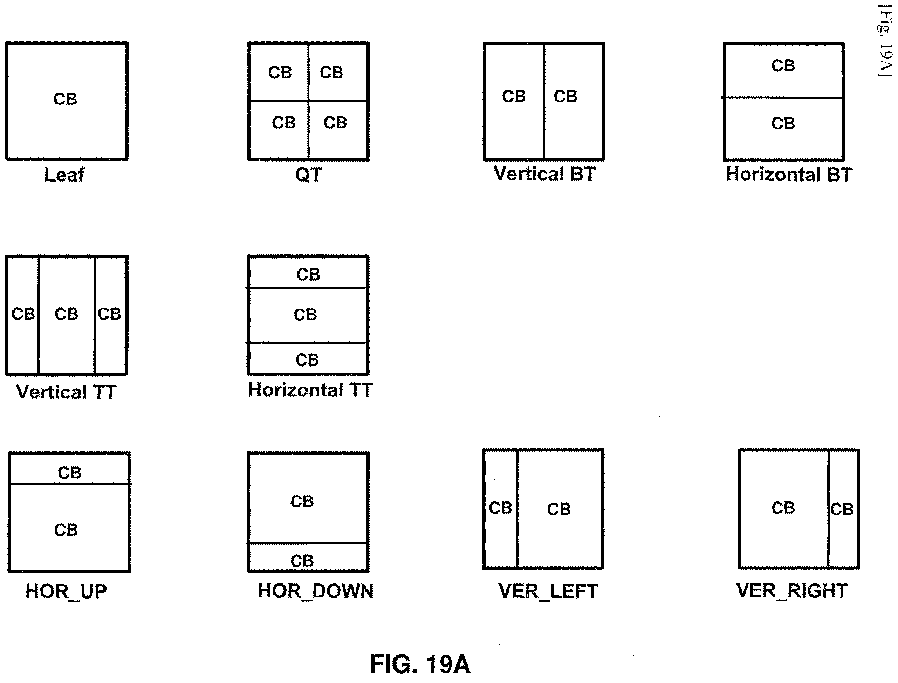

As described above, ITU-T H.265 supports four asymmetric PB partitions for inter prediction. It should be noted that the asymmetric PB partitions provided in ITU-T H.265 may be less than ideal. That is, the asymmetric PB partitions provided in ITU-T H.265 are limited to enabling PBs having one quarter of the width or height of a square CB. For example, for a 32x32 CB in ITU-T H.265, a M/4xM left partition partitions the CBs into a 8x32 PB and a 24x32 PB. ITU-T H.265 does not provide a mechanism to partition a CB into PBs based on an arbitrary offset. That is, PBs are not allowed to have an arbitrary width or height. Further, it should be noted that with respect to JEM, techniques have been proposed for partitioning CUs according to asymmetric binary tree partitioning. F. Le Léannec, et al., "Asymmetric Coding Units in QTBT," 4th Meeting: Chengdu, CN, 15-21 October 2016, Doc. JVET-D0064 (hereinafter "Le Léannec"), describes where in addition to the symmetric vertical and horizontal BT split modes, four additional asymmetric BT split modes are defined. In Le Léannec, the four additionally defined BT split modes for a CU include: horizontal partitioning at one quarter of the height (at the top for one mode or at the bottom for one mode) or vertical partitioning at one quarter of the width (at the left for one mode or the right for one mode). The four additionally defined BT split modes in Le Léannec are illustrated in FIG. 19A as Hor_Up, Hor_Down, Ver_Left, and Ver_Right. Thus, the asymmetric BT partitions in Le Léannec, are similar to the asymmetric PB partitions provided in ITU-T H.265 and as such, are limited and do not allow arbitrary partitioning. For example, according to the techniques in Le Léannec, a rectangular node having a size of 32x128 is limited to being partitioned as follows: (1) symmetrically horizontally into two 32x64 blocks; (2) symmetrically vertically into two 16x128 blocks; (3) asymmetric horizontally into a 32x32 block at the top position and a 32x96 block at the bottom position; (4) asymmetric horizontally into a 32x96 block at the top position and a 32x32 block at the bottom position; (5) asymmetric vertically into a 8x128 block at the left position and a 24x128 block at the right position; (6) asymmetric vertically into a 24x128 block at the left position and a 8x128 block at the right position. Table 7 provides a summary of the bin coding tree signaling used in Le Léannec for signaling possible partitions.

Table 7

| Bin Coding Tree | | | | | Partition Type |
|---|---|---|---|---|---|
| Bin$_0$ | Bin$_1$ | Bin$_2$ | Bin$_3$ | Bin$_4$ | |
| 1 | N/A | N/A | N/A | N/A | Quad Tree Split |
| 0 | 0 | N/A | N/A | N/A | Leaf Node |

(continued)

| Bin Coding Tree | | | | | Partition Type |
|---|---|---|---|---|---|
| $Bin_0$ | $Bin_1$ | $Bin_2$ | $Bin_3$ | $Bin_4$ | |
| 0 | 1 | 0 | 0 | N/A | Horizontal Symmetric Binary Tree |
| 0 | 1 | 0 | 1 | 0 | Horizontal 1/4 of block dimension top (Hor_Up) |
| 0 | 1 | 0 | 1 | 1 | Horizontal 1/4 of block dimension bottom (Hor_Down) |
| 0 | 1 | 1 | 0 | N/A | Vertical Symmetric Binary Tree |
| 0 | 1 | 1 | 1 | 0 | Vertical 1/4 of block dimension left (Ver_Left) |
| 0 | 1 | 1 | 1 | 1 | Vertical 1/4 of block dimension right (Ver_Right) |

In some cases, it may be useful to partition a CTB according to arbitrary offsets. For example, in the example above, for a 32x32 CB in some cases, based on the properties of an image, it may be useful to partition the CB into a 10x32 PB and a 22x32 PB. Further, referring to Table 3 above, in some cases it may be useful to further partition a binary leaf node according to an arbitrary offset. That is, in JEM, potential leaf node sizes are limited to those illustrated in Table 3. For example, in the case where a binary leaf node is 32x128, it may be useful to further partition the binary leaf node into a 32x28 CB and a 32x100 CB. It should be noted that partitioning a block of video data according to an arbitrary offset according to the techniques described herein may be applied in, at least, one or more of the following cases: (1) arbitrary offset partitioning may be applied to the partitioning of a CTU (or CTB) into CUs (or CB) in the case where a CU (or CB) forms the root of a PU (or PB); (2) arbitrary offset partitioning may be applied to the partitioning of a CTU (or CTB) into CUs (or CBs) in the case where a CU (or CB) does not form the root of a PU (or PB), i.e., in the case where a prediction is determined at the CB level; (3) arbitrary offset partitioning may be applied to the partitioning of a PU (or PB); and (4) arbitrary offset partitioning may be applied to partitioning blocks of samples which correspond to nodes of a coding tree. It should be noted that in some cases arbitrary offset partitioning may be selectively enabled for CTU partitioning and/or PU partitioning.

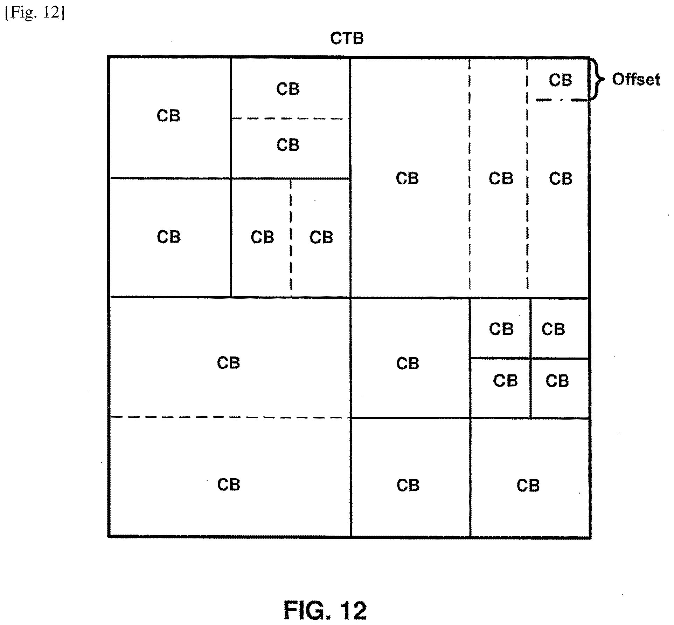

FIG. 12 illustrates an example where a binary leaf node is further partitioned horizontally according an offset. It should be noted that although the example illustrated in FIG. 12 includes partitioning a binary leaf node according to arbitrary offset partitioning, such an example should not be construed as limiting and as described herein, arbitrary offset partitioning, may be applicable to various scenarios where video data is partitioned. In the example illustrated in FIG. 12, the CTB may correspond to a luma CTB having a size of 256x256. In such a case, the binary leaf node at the upper right corner would have a size of 32x128. As described above, it may be useful to further partition a 32x128 binary leaf node into a 32x28 CB and a 32x100 CB. In the example partitioning illustrated in FIG. 12, offset would have a value of 28. In one example, video encoder 200 may be configured to partition leaf nodes of a QTBT according to an offset. In one example, video encoder 200 may be configured such that any number of asymmetric offset partition structures may be allowed. That is, in some examples, the offset may be within the range of 2 to block height minus 2 for vertical offsets and within the range of 2 to block width minus 2 for horizontal offsets. In some examples, the offset may be within the range of 1 to block height minus 1 for vertical offsets and within the range of 1 to block width minus 1 for horizontal offsets. In some examples, the allowed asymmetric offset partitions may be restricted based on properties associated with a CTU and/or prediction modes. For example, asymmetric offset partitions may be restricted based on whether the CU is coded according to a intra prediction or an inter prediction. Further, in some examples, asymmetric offset partitions may be restricted based on the size of a CU or CB. In one example, the value of an offset may be restricted to a set integer multiples. In one example, the value of an offset may be restricted to a set integer multiples and some additional integer values (e.g., 2). In some examples, the set of integer multiples may be based on the size of the leaf node at which an offset is being applied. For example, with respect to the case of horizontally partitioning a 32x128 leaf node as described above. In one example, the value of offset may be restricted to a multiple of 4 (i.e., allowed values of offset include 4, 8, 12, 16,..., 120, 124). In one example, the value of offset may be specified using an indexed set of offset values. For example, with respect to the case of horizontally partitioning a 32x128 leaf node as described above, in one example, the value of offset may be restricted to the following set of offset values 28, 42, 84, and 100. In some examples, an indexed set of offset values may be selected in order to avoid partitions that may be signaled using QTBT signaling or close variations thereof. For example, in the case of horizontally partitioning a 32x128 leaf node, in some cases (e.g., depending on the value of MaxBTDepth), the BT structure may allow the 32x128 leaf node to be split into two 32x64 partitions. In this case, an indexed set of offset values may be selected such that offset is not within a specified range of 64. Further in some examples, the indexed set of offset values may be based on the value of MaxBTDepth.

It should be noted that allowed asymmetric offset partitions, in some examples, may include horizontal or vertical partitioning. For example, in one example, with respect to a 32x128 binary leaf, video encoder 200 may be configured to further partition the 32x128 binary leaf node into a 8x128 CB and a 24x128 CB. In this manner, an offset may indicate an offset value relative to an anchor point. For example, an anchor point may include a left edge for vertical partitioning and a top edge for horizontal partitioning. It should be noted that in some examples, the anchor may be a set number of samples from an edge. For example, the anchor may be set at 4 samples from an edge. In this manner, an offset value of zero would indicate a partition 4 samples from the edge. In one example, offset may include a fixed length binarization. In one example, offset may include a truncated unary binarization.

As described above, in one example, the value of offset may be specified using an indexed set of offset values. In one example, an indexed set of offset values may correspond to fractional partitions. Table 8 and Table 9 provide examples of indexed sets of offset values corresponding to fractional partitions. With respect to Table 8 and Table 9, it should be noted that fractional partitions, in some examples, may be rounded to the nearest sample value. For example, with respect to the case of horizontally partitioning a 32x128 leaf node as described above, in one example a 1/3 offset from the edge value may be rounded to 43. With respect to Table 8 and Table 9, it should be noted that in an example, fractional partitions may be rounded to the nearest integer-multiple sample value. For example, with respect to the case of horizontally partitioning a 32x128 leaf node as described above, in one example a 1/3 offset from the edge value may be rounded to 44, which is the nearest 4 sample multiple. With respect to Table 8 and Table 9, it should be noted that, in an example, fractional partitions may be rounded down to the nearest integer-multiple sample value. For example, with respect to the case of horizontally partitioning a 32x128 leaf node as described above, in one example, a 1/3 offset from the edge value may be rounded to 40 which is the nearest 4 sample multiple.

Table 8

| Offset from Edge | Binary representation of Offset |
|---|---|
| 1/4 of block dimension under consideration | 01 |
| 1/2 of block dimension under consideration | 1 |
| 3/4 of block dimension under consideration | 00 |

Table 9

| Offset from Edge | Binary representation of Offset |
|---|---|
| 1/3 of block dimension under consideration | 01 |
| 1/2 of block dimension under consideration | 1 |
| 2/3 of block dimension under consideration | 00 |

As described above, video encoder 200 may be configured to signal a QTBT. In one example, video encoder 200 may be configured to indicate offset values by incorporating offset signaling within the signaling of a QTBT. For example, the example illustrated in FIG. 12 includes the same QTBT structure as the example illustrated in FIG. 1. As such, offset signaling may be based on the example pseudo-syntax illustrated in Table 1, where, in one example, offset signaling is included after syntax indicating a leaf node. Table 10 illustrates an example pseudo-syntax corresponding to the case where for a 256x256 CTB the binary leaf node at the upper right corner having a size of 32x128 is further partitioned a 32x28 CB and a 32x100 CB.

Table 10

```
...
    QT flag = 0; BT split = 1; //Depth 1 syntax
        BT split = 0; //Depth 2 syntax
            Offset = FALSE //Offset Flag
        BT split = 1; //Depth 2 syntax
            BT split = 0; //Depth 3 syntax
                Offset = FALSE //Offset Flag
            BT split = 0; //Depth 3 syntax
                Offset = TRUE; //Offset Flag
                Offset_type = Horizontal; //Offset Type Flag
```

(continued)

| |
|---|
| Offset value = 28; //Offset value |
| QT flag = 0; BT split = 2; //Depth 1 syntax |
| ... |

Thus, according to the example illustrated in Table 10, video encoder 200 may be configured to signal a flag indicating offset partitioning is applied to a QTBT leaf node, signal a flag indicating whether the offset partitioning is a vertical or a horizontal partitioning, and signal a value indicating an offset value. It should be noted that in other examples, video encoder 200 may be configured to indicate offset values using other signaling techniques. For example, video encoder 200 may be configured to signal offset values at the CB level. It should be noted that in some examples, offsets may be signaled as an extension of current BT split mode signaling. That is, for example, in JEM, a BT split mode syntax elements results in halving a node. In one example, according to the techniques descried herein, BT split mode signaling may include signaling a split type and offset pair. For example, referring to the example illustrated FIG. 12, in one example the offset may be signaled as follows: (BT split = 2, Offset value = 28).

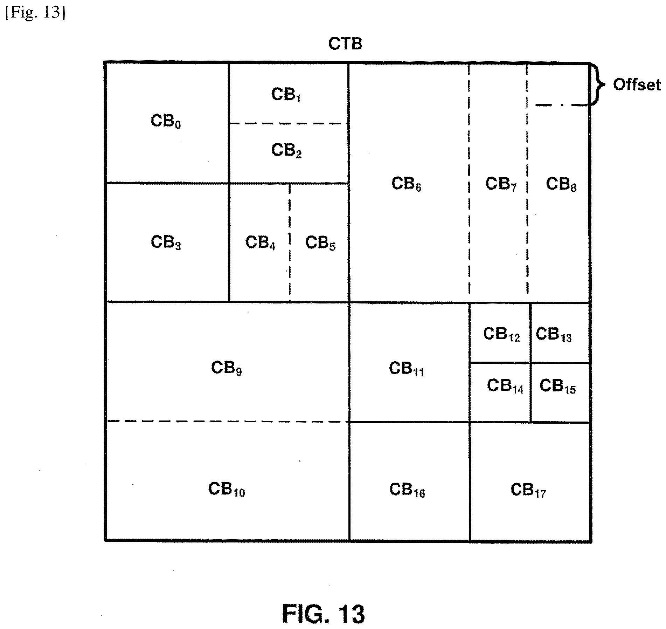

Further, in one example, each CB of a CTB may be indexed according to a defined scan order and video encoder 200 may be configured to signal offset values by signaling an index value for a CB. For example, referring to FIG. 13, the binary leaf node at the upper right corner is illustrated as being indexed as CB8. Thus, in one example, video encoder 200 may be configured to use this index value to indicate that offset partitioning is performed for this leaf node. In this manner, video encoder 200 represents an example of a device configured to determine an offset value and partition the leaf node according to the offset value.

In one example, a set of split decisions (arbitrary offset partition(s) and/or QT partition(s)) in a pre-determined order may be applied to a block of samples and indicated in the bitstream using a single indicator.

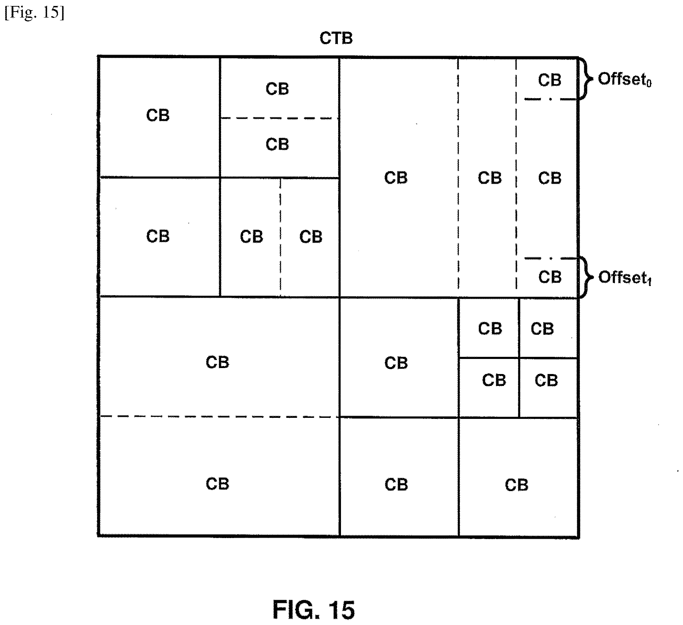

As described above, offsets may be signaled as an extension of current BT split mode signaling and may include signaling a split type and offset pair. In some cases, it may be useful to partition a leaf node according to multiple offsets. For example, with respect to the case of horizontally partitioning a 32x128 leaf node as described above, in some cases, it may be useful to partition the 32x128 leaf node from top-to-bottom as follows 32x16, 32x96, and 32x16. FIG. 15 illustrates a general case of partitioning a leaf node according to multiple arbitrary offsets. In the case where the top-right leaf node in FIG. 15 is 32x128 and top-to-bottom partitioning of 32x16, 32x96, and 32x16 is used, Offset0 may be signaled as being equal 16 and Offset1 may be signaled as being equal to 112. It should be noted that although in the example illustrated with respect to FIG. 15, Offset0 is 16 samples from the top edge and Offset1 is 16 samples from the bottom edge, in some examples, according to the techniques described herein the values of Offset0 and Offset1 may be arbitrary.

As described above, for example with respect to Tables 8 and 9, signaling of offset values may including using indexed sets of offset values corresponding to fractional partitions. In a similar manner, indexed sets of offset values corresponding to fractional partitions may be used when partitioning a leaf node according to multiple offsets. For example, in the case where the top-right node in FIG. 15 is 32x128 and top-to-bottom partitioning of 32x16, 32x96, and 32x16 is used, Offset0 and Offset1 may be signaled by using an index value corresponding to 1/8, provided a vertical partitioning mode indicating an offset from the top edge and an offset from the bottom edge is signaled. It should be noted that in some cases, partitioning a node into three blocks about a direction may be referring to as triple tree (TT) partitioning. Thus, split types may include horizontal and vertical binary splits and horizontal and vertical TT splits.

Li, et al., "Multi-Type-Tree," 4th Meeting: Chengdu, CN, 15-21 October 2016, Doc. JVET-D0117r1 (hereinafter "Li"), describes an example where in addition to the symmetric vertical and horizontal BT split modes, two additional TT split modes are defined. In Li, the two additionally defined TT split modes for a node include: (1) horizontal TT partitioning at one quarter of the height from the top edge and the bottom edge of a node; and (2) vertical TT partitioning at one quarter of the width from the left edge and the right edge of a node. The two additionally defined TT split modes in Li are illustrated in FIG. 19A as Vertical TT and Horizontal TT. Table 11 provides a summary of the bin coding tree signaling used in Li for signaling possible partitions.

Table 11

| Bin Coding Tree | | | | Partition Type |
|---|---|---|---|---|
| $Bin_0$ | $Bin_1$ | $Bin_2$ | $Bin_3$ | |
| 1 | N/A | N/A | N/A | Quad Tree Split |
| 0 | 0 | N/A | N/A | Leaf Node |
| 0 | 1 | 0 | 0 | Horizontal Symmetric Binary Tree |

(continued)

|  | Bin Coding Tree |  |  | Partition Type |
|---|---|---|---|---|
| $Bin_0$ | $Bin_1$ | $Bin_2$ | $Bin_3$ |  |
| 0 | 1 | 0 | 1 | Horizontal Triple Tree at 1/4 of block dimension. (Horizontal TT) |
| 0 | 1 | 1 | 0 | Vertical Symmetric Binary Tree |
| 0 | 1 | 1 | 1 | Vertical Triple Tree at 1/4 of block dimension (Vertical TT) |

Referring to Table 11, the partitioning types defined in Li are limited. For example, in the case of a 32x128 node, Li fails to define signaling enabling arbitrary asymmetrical BT partitioning (e.g., 32x28 and 32x100 partitioning) and further fails to define signaling enabling arbitrary asymmetrical TT partitioning (top-to-bottom partitioning of 32x16, 32x96, and 32x16). Thus, the techniques described in Li may be less than ideal.

According to the techniques described herein, horizontal TT partitioning and vertical TT partitioning may utilize predefined offsets other than the one quarter offsets illustrated in the Table 11. For example, in one example, horizontal TT partitioning and vertical TT partitioning may utilize one third offsets. In one example, similar to the techniques described above with respect to Table 8 and Table 9 above, fractional partitions used in TT partitioning may be rounded to the nearest sample value or sample value having being a particular integer multiple (e.g., 4). For example, if fraction offsets occurring at 1/4 and 3/4 from an edge are rounded to the nearest integer multiple of 4, in the case of a block dimension of 28, offsets in this case may occur at 8 and 20. In some examples, the particular integer multiple (for one or more components) may be dependent on a picture type (e.g., intra or inter) and/or a video sampling format. For example, in some cases, the luma component and the chroma components may share a partitioning structure (e.g., for inter pictures) and for a 4:2:0 chroma format, an integer multiple may be 8 for the luma component and 4 for the chroma components and for a 4:4:4 chroma format, an integer multiple may be 8 for the luma component and 8 for the chroma components. It should be noted that in other examples, any other combinations of one or more mathematical operations may be used (e.g., floor to a pre-determined integer multiple, ceiling to a pre-determined integer multiple, round-up to a pre-determined integer multiple, round-down to a pre-determined integer multiple) to derive a multiple of a pre-determined integer for offsets. In one example, only a first offset may be derived to be a multiple of a pre-determined integer and the remaining offset may be derived based on the first offset and/or the dimension (e.g. height, width) being partitioned. For example, when the block dimension being partitioned is 28, for one offset a fraction offsets occurring at 1/4 from an edge may be rounded to the nearest integer multiple of 4 (i.e., occur at 8) and a second offset may be determined as same number of samples (i.e. 8) from the opposite edge (i.e., occur at 20).

Referring again to Table 11, it should be noted that Bin2 indicates whether a split is vertical or horizontal and Bin3 indicates whether the split type is BT or TT, according to the techniques described herein, Bin2 and Bin3 may be interchanged, e.g., Bin2 indicates whether the split type is BT or TT and Bin3 indicates whether a split is vertical or horizontal. Further, it should be noted that in some examples, according to the techniques described herein, in some examples, partitions may be inferred. For example, according to the signaling provided in Table 11, in one example, a partition may be inferred as TT (as opposed to BT) for a child node, if the following conditions are satisfied: (1) if a BT split occurred on the parent node to generate the child node, (2) the child node is the second BT leaf (i.e., the right or bottom BT leaf), and (3) a BT split perpendicular to the split occurring on the parent node was performed on the first BT leaf (i.e., the left or top BT leaf). That is, a BT split on the second BT resulting in a QT split is not allowed, as this may be signaled using a QT split on the parent node. As such, in some examples, Bin3 in Table 11 may be inferred to be equal to 1. In an example, when signaling of information is inferred at the decoder, the information is not explicitly received by the decoder. In an example, when signaling of information is inferred at the decoder, the information is not explicitly included in the bitstream.

As described above, according to the techniques described herein, Table 11 may be modified such that Bin2 indicates whether the split type is BT or TT and Bin3 indicates whether a split is vertical or horizontal. In this case, similar to that described above, a vertical or horizontal split may be inferred. In one example, a partition may be inferred as vertical or horizontal for a child node, if the following conditions are satisfied: (1) the child node is the second BT leaf (i.e., the right or bottom BT leaf), and (2) a BT split perpendicular to the split occurring on the parent node was performed on the first BT leaf (i.e., the left or top BT leaf). In this case, a partition may be inferred for the child node as perpendicular to the split occurring on the first BT leaf. That is, a BT split on the second BT resulting in a QT split is not allowed, as this may be signaled using a QT split on the parent node.

According to the techniques described herein, a video encoder may be configured to partition video blocks according QT partitioning, offset BT partitioning, and offset TT partitioning. Table 12 illustrates an example of bin coding tree signaling used for signaling QT partitioning, offset BT partitioning, and offset TT partitioning according to the techniques described herein.

Table 12

| Bin Coding Tree | | | | Offset Signaling | | Partition Type |
|---|---|---|---|---|---|---|
| $Bin_0$ | $Bin_1$ | $Bin_2$ | $Bin_3$ | $Offset_0$ | $Offset_1$ | |
| 1 | N/A | N/A | N/A | N/A | N/A | Quad Tree Split |
| 0 | 0 | N/A | N/A | N/A | N/A | Leaf Node |
| 0 | 1 | 0 | 0 | $Offset_0$ | N/A | Horizontal Offset Binary Tree |
| 0 | 1 | 0 | 1 | $Offset_0$ | $Offset_1$ | Horizontal Offset Triple Tree |
| 0 | 1 | 1 | 0 | $Offset_0$ | N/A | Vertical Offset Binary Tree |
| 0 | 1 | 1 | 1 | $Offset_0$ | $Offset_1$ | Vertical Offset Triple Tree |

As illustrated in Table 12, Bin0 indicates whether a block is partitioned according to a QT split. In some examples, when a max QT depth is reached, Bin0 is not included in the bitstream and its value may be inferred by a video decoder to be 0. In some examples, when a type of partition has been used for a parent node (e.g., BT or TT), Bin0 is not included in the bitstream and its value may be inferred by a video decoder to be 0. Bin1 indicates whether the block is a leaf node. Bin2 indicates whether the block is partitioned according to horizontal or vertical partitioning mode. Bin3 indicates whether the block is partitioned according to a BT or a TT partitioning mode. As further illustrated in Table 12, for BT partitioning modes an offset, Offset0, is signaled. It should be noted that Offset0, may be signaled using any combination of the offset signaling techniques described herein. For example, Offset0 may be signaled using indexed sets of offset values corresponding to fractional partitions, a number of samples from an anchor, a fraction number of samples from an anchor, and/or using a flag and conditionally signaling an offset value. For example, if a flag is used, the flag may indicate whether the partition is symmetric or whether the partition is arbitrary and an offset value is signaled. As further illustrated in Table 12, for TT partitioning modes, offsets, Offset0 and Offset1, are signaled. It should be noted that Offset0 and Offset1 may be signaled using any combination of the offset signaling techniques described herein. Referring to Table 12, it should be noted that in some examples, the order of Bin2 and Bin3 may be interchanged. That is, vertical or horizontal partitioning mode signaling may be indicated after one of a BT or TT partitioning mode is indicated.

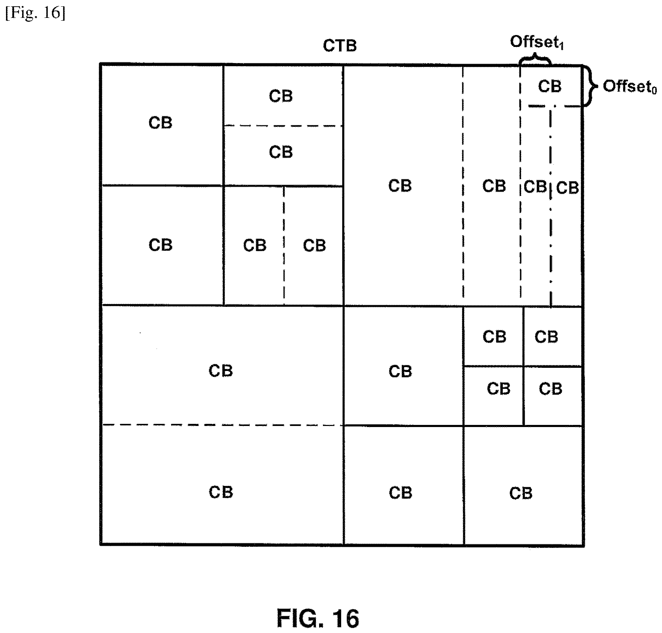

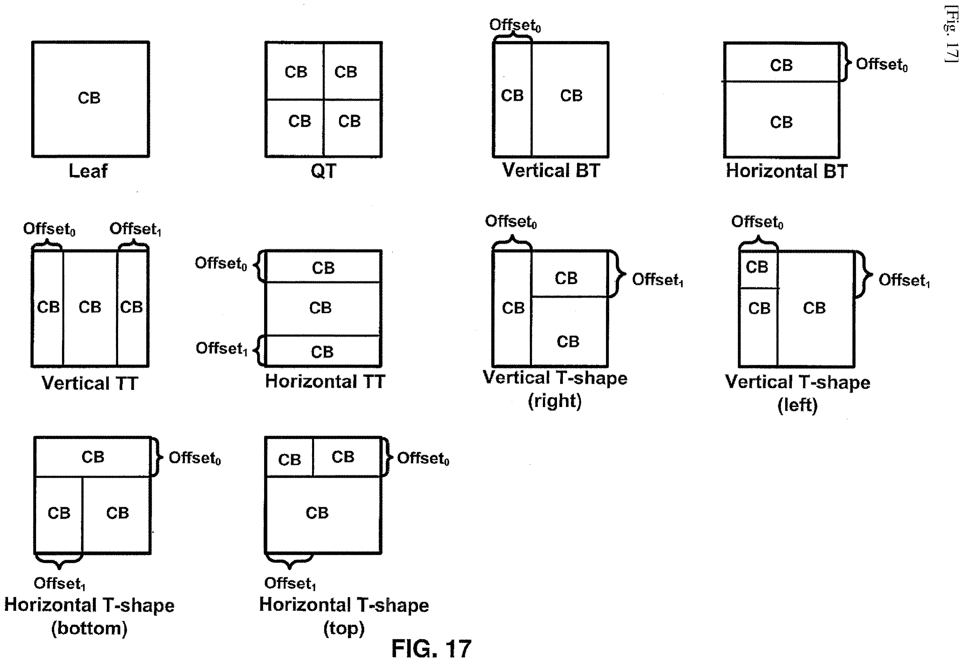

In addition to BT and TT split type, T-shape split types may be defined. FIG. 17 illustrates examples of QT partitioning, offset BT partitioning, offset TT partitioning, and offset T-shape partitioning. As illustrated in FIG. 17, T-shape partitioning includes first partitioning a block according to a BT partition and further partitioning one of the resulting blocks according to the BT partition having a perpendicular orientation. As illustrated, a T-shape split results in three blocks. FIG. 16 illustrates a general case of partitioning a leaf node according to a T-shape split having arbitrary offsets. As further illustrated in FIG. 17, T-shape splits may be defined based on which of the blocks resulting after the first partition is further partitioned (e.g., left or right for vertical T-shapes). It should be noted that as used herein 2X T-shape partitioning may refer to a case where a T-shape partition is generated using two symmetric BT splits. According to the techniques described herein, a video encoder may be configured to partition video blocks according QT partitioning, offset BT partitioning, offset TT partitioning and offset T-shape partitioning. Table 13 illustrates an example of bin coding tree signaling used for signaling QT partitioning, offset BT partitioning, offset TT partitioning, and offset T-shape partitioning according to the techniques described herein.

Table 13

| Bin Coding Tree | | | | | | Offset Signaling | | Partition Type |
|---|---|---|---|---|---|---|---|---|
| $Bin_0$ | $Bin_1$ | $Bin_2$ | $Bin_3$ | $Bin_4$ | $Bin_5$ | $Offset_0$ | $Offset_1$ | |
| 1 | N/A | N/A | N/A | N/A | N/A | N/A | N/A | Quad |
| 0 | 0 | N/A | N/A | N/A | N/A | N/A | N/A | Leaf Node |
| 0 | 1 | 0 | 0 | N/A | N/A | $Offset_0$ | N/A | Horizontal Offset Binary |
| 0 | 1 | 0 | 1 | 0 | N/A | $Offset_0$ | $Offset_1$ | Horizontal Offset Triple Tree |
| 0 | 1 | 0 | 1 | 1 | 0 | $Offset_0$ | $Offset_1$ | Horizontal Offset T-shaped Tree (bottom) |
| 0 | 1 | 0 | 1 | 1 | 1 | $Offset_0$ | $Offset_1$ | Horizontal Offset T-shaped Tree (top) |
| 0 | 1 | 1 | 0 | N/A | N/A | $Offset_0$ | N/A | Vertical Offset Binary |

(continued)

| Bin Coding Tree | | | | | | Offset Signaling | | Partition Type |
|---|---|---|---|---|---|---|---|---|
| Bin$_0$ | Bin$_1$ | Bin$_2$ | Bin$_3$ | Bin$_4$ | Bin$_5$ | Offset$_0$ | Offset$_1$ | |
| 0 | 1 | 1 | 1 | 0 | N/A | Offset$_0$ | Offset$_1$ | Vertical Offset Triple Tree. |
| 0 | 1 | 1 | 1 | 1 | 0 | Offset$_0$ | Offset$_1$ | Vertical Offset T-shaped Tree (right) |
| 0 | 1 | 1 | 1 | 1 | 1 | Offset$_0$ | Offset$_1$ | Vertical Offset T-shaped Tree (left) |

As illustrated in Table 13, Bin0 indicates whether a block is partitioned according to a QT split. In some examples, when a type of partition has been used for a parent node (e.g., BT, TT, or T-shape), Bin0 is not included in the bitstream and its value may be inferred by a video decoder to be 0. Further, in some examples, when T-shape partitioning is used for a parent node, then BT partitioning may not be allowed for the current node. More generally, in some examples, a partitioning type of parent node may determine the allowed partitioning types for current node in the partition tree. Further, it should be noted with respect to Tables 11-13, according to the techniques described herein, types of partitions available to further partition a node (and thus whether bin values can be inferred) may be dependent on one or more of block width of the node, block height of the node, depth of the node, number and/or types of partitions used to generate the node, offsets used to generate the node, and/or the shapes of sibling nodes. Referring to Table 13, Bin1 indicates whether the block is a leaf node. Bin2 indicates whether the block is partitioned according to horizontal or vertical partitioning mode. Bin3 indicates whether the block is partitioned according to a BT partitioning mode. As further illustrated in Table 13, for BT partitioning modes, an offset, Offset0, is signaled. It should be noted that Offset0, may be signaled using any combination of the offset signaling techniques described herein. Bin4 indicates whether the block is partitioned according to a TT partitioning mode. Bin5 indicates the orientation of a T-shape partition. As further illustrated in Table 12, for TT and T-Shape partitioning modes, offsets, Offset0 and Offset1, are signaled. It should be noted that Offset0 and Offset1 may be signaled using any combination of the offset signaling techniques described herein. It should be noted that in some examples, Offset0 and Offset1 may signal an offset position as X^Offset. For example, X may be equal to 2, and as such Offset0 and Offset1 would indicate an offset position as a power of 2. In a similar manner, Offset0 and Offset1 may signal an offset position as X*Offset. In each of these cases, Offset0 and Offset1 may include positive integers, and may be greater than particular values (e.g., 0 or 1) in some examples. Further, referring to Table 13, it should be noted that is some examples, the order of some bins may be interchanged. Further, it should be noted that in some examples, orientation information indicated by Bin5 may instead be provided by Offset signaling.

It should be noted that there may be several ways to signal a particular partitioning for a CU. In such cases, some ways of signaling a particular partition structure may be considered inefficient and/or redundant. For example, in some cases, BT and TT splits can result in square blocks that can be achieved by simply using QT splitting. Redundant and/or inefficient signaling may be disallowed. It should be noted that when signaling is disallowed, in some cases, other type of signaling may be inferred for example, if splitting of a certain type is disallowed at a particular depth level (e.g., BT splitting), other types of splitting can be inferred at subsequent depths (e.g., TT splitting).

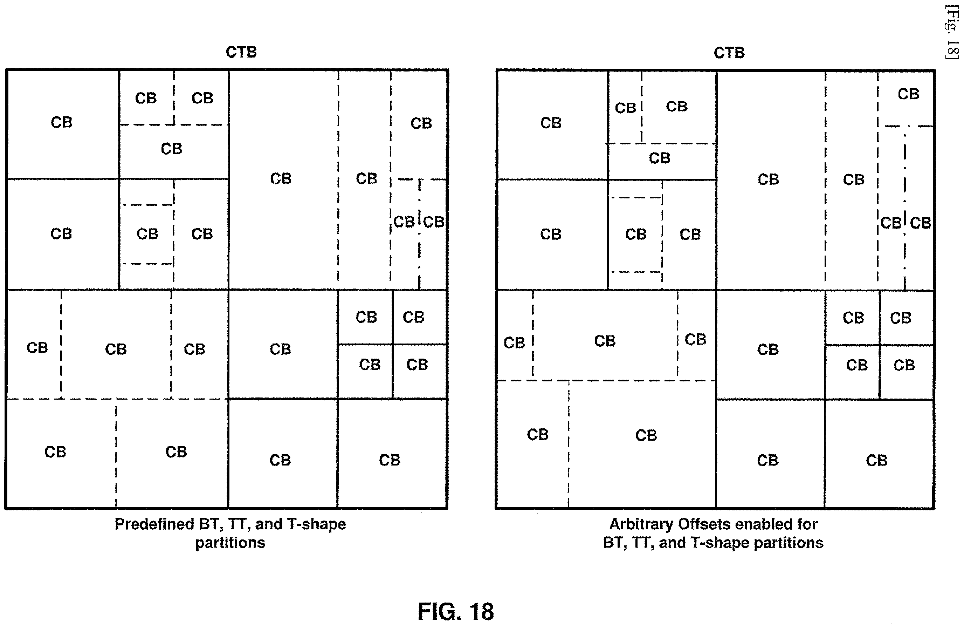

Further, it should be noted that although the signaling illustrated in the example of Table 13 enables a root node to be partitioned into an arbitrary set of resulting leaf nodes according to various combinations of split modes and signaled offsets, in some cases, particular combinations of split modes and offsets generating a set of resulting leaf nodes may provide little benefit in terms of coding improvement compared to a particular combination of split modes and offsets that may be signaled in a more efficient manner. That is, there is a trade-off between the overhead for signaling partitioning (e.g., average number of bits used to signal a partition) and the coding performance of the resulting leaf nodes. FIG. 18 illustrates an example where a CTB to the left is illustrated as being partitioned according to QT, BT, TT, and T-shaped partitioning modes having predefined shapes (e.g., symmetric BT splitting, 1/4-1/2-1/4 TT splitting, and 2X T-shaped splitting) and the CTB to the right is illustrated as being partitioned according to corresponding QT, BT, TT, and T-shaped partitioning modes having arbitrary offsets. In the example illustrated in FIG. 18, for a particular picture, the CTB to the right may more closely align with local picture characteristics, however, the CTB to the left may be signaled without incurring the signaling overhead associated with signaling arbitrary offsets. According to the techniques the described herein a set of partitioning modes having predefined shapes may be signaled in order to optimize partitioning flexibility and signaling overhead.

FIGS. 19A-19C illustrate examples of predefined shapes that may be signaled according to the techniques described herein. Table 14 illustrates an example of bin coding signaling used for signaling QT partitioning, symmetric BT partitioning, TT at 1/4 partitioning, and 2X T-shape partitioning according to the techniques described herein.

Table 14

| Bin Coding | | | | | Partition Type |
|---|---|---|---|---|---|
| $Bin_0$ | $Bin_1$ | $Bin_2$ | $Bin_3$ | $Bin_4$ | |
| 1 | N/A | N/A | N/A | N/A | Quad |
| 0 | 0 | N/A | N/A | N/A | Leaf Node |
| 0 | 1 | 0 | 0 | 0 | Horizontal Symmetric Binary |
| 0 | 1 | 0 | 1 | 0 | Horizontal Triple Tree at 1/4 of block dimension. (Horizontal TT) |
| 0 | 1 | 1 | 0 | 0 | Horizontal 2X T-shaped Tree (bottom) |
| 0 | 1 | 1 | 0 | 1 | Horizontal 2X T-shaped Tree (top) |
| 0 | 1 | 0 | 0 | 1 | Vertical Symmetric Binary |
| 0 | 1 | 0 | 1 | 1 | Vertical Triple Tree at 1/4 of block dimension. (Horizontal TT) |
| 0 | 1 | 1 | 1 | 0 | Vertical 2X T-shaped Tree (right) |
| 0 | 1 | 1 | 1 | 1 | Vertical 2X T-shaped Tree (left) |

It should be noted that in other examples, other types of partition shapes (e.g., a subset of those illustrated in FIGS. 19A-19C) may be signaled using the bin coding illustrated in the example of Table 14. Table 15 illustrates an example of bin coding signaling used for signaling QT partitioning, symmetric BT partitioning, and 1/4 T partitioning according to the techniques described herein.

Table 15

| Bin Coding | | | | | Partition Type |
|---|---|---|---|---|---|
| $Bin_0$ | $Bin_1$ | $Bin_2$ | $Bin_3$ | $Bin_4$ | |
| 1 | N/A | N/A | N/A | N/A | Quad |
| 0 | 0 | N/A | N/A | N/A | Leaf Node |
| 0 | 1 | 0 | 0 | 0 | Horizontal Symmetric Binary |
| 0 | 1 | 0 | 1 | 0 | Top-Left 1/4 T |
| 0 | 1 | 1 | 0 | 0 | Left-Bottom 1/4 T |
| 0 | 1 | 1 | 0 | 1 | Bottom-Right 1/4 T |
| 0 | 1 | 0 | 0 | 1 | Vertical Symmetric Binary |
| 0 | 1 | 0 | 1 | 1 | Top-Right 1/4 T |
| 0 | 1 | 1 | 1 | 0 | Right-Top 1/4 T |
| 0 | 1 | 1 | 1 | 1 | Left-Bottom 1/4 T |

It should be noted that in some examples, higher level signaling (e.g., slice level or a CU level flag) may be used to indicate whether the predefined shapes illustrated in Table 14 or the predefined shapes illustrated in Table 15 are used for partitioning.

It should be noted that in other examples, other types of partition shapes (e.g., a subset of those illustrated in FIGS. 19A-19C) may be signaled using the bin coding illustrated in the example of Table 11. Table 16A-16B illustrates examples of bin coding signaling used for signaling QT partitioning, symmetric BT partitioning, and T-shape partitioning according to the techniques described herein.

Table 16A

| Bin Coding Tree | | | | Partition Type |
|---|---|---|---|---|
| $Bin_0$ | $Bin_1$ | $Bin_2$ | $Bin_3$ | |
| 1 | N/A | N/A | N/A | Quad Tree Split |

(continued)

| Bin Coding Tree | | | | Partition Type |
|---|---|---|---|---|
| Bin$_0$ | Bin$_1$ | Bin$_2$ | Bin$_3$ | |
| 0 | 0 | N/A | N/A | Leaf Node |
| 0 | 1 | 0 | 0 | Horizontal Symmetric Binary Tree |
| 0 | 1 | 0 | 1 | Horizontal 2X T-shape (bottom) |
| 0 | 1 | 1 | 0 | Vertical Symmetric Binary Tree |
| 0 | 1 | 1 | 1 | Vertical 2X T-shape (right) |

Table 16B

| Bin Coding Tree | | | | Partition Type |
|---|---|---|---|---|
| Bin$_0$ | Bin$_1$ | Bin$_2$ | Bin$_3$ | |
| 1 | N/A | N/A | N/A | Quad Tree Split |
| 0 | 0 | N/A | N/A | Leaf Node |
| 0 | 1 | 0 | 0 | Horizontal Symmetric Binary Tree |
| 0 | 1 | 0 | 1 | Top-Left 1/4 T |
| 0 | 1 | 1 | 0 | Vertical Symmetric Binary Tree |
| 0 | 1 | 1 | 1 | Right-Bottom 1/4 T |

It should be noted that in some examples, higher level signaling (e.g., slice level or a CU level flag) may be used to indicate whether the predefined shapes illustrated in Table 11, the predefined shapes illustrated in Table 16A, and/or the predefined shapes illustrated in Table 16B are used for partitioning.

It should be noted that in other examples, other types of partition shapes (e.g., a subset of those illustrated in FIGS. 19A-19C) may be signaled using the bin coding illustrated in the example of Table 7. Table 17A-17B illustrates examples of bin coding signaling used for signaling QT partitioning, symmetric BT partitioning, and T-shape partitioning according to the techniques described herein.

Table 17A

| Bin Coding Tree | | | | | Partition Type |
|---|---|---|---|---|---|
| Bin$_0$ | Bin$_1$ | Bin$_2$ | Bin$_3$ | Bin$_4$ | |
| 1 | N/A | N/A | N/A | N/A | Quad Tree Split |
| 0 | 0 | N/A | N/A | N/A | Leaf Node |
| 0 | 1 | 0 | 0 | N/A | Horizontal Symmetric Binary Tree |
| 0 | 1 | 0 | 1 | 0 | Horizontal 2X T-shape (bottom) |
| 0 | 1 | 0 | 1 | 1 | Horizontal 2X T-shape (top) |
| 0 | 1 | 1 | 0 | N/A | Vertical Symmetric Binary Tree |
| 0 | 1 | 1 | 1 | 0 | Vertical 2X T-shape (left) |
| 0 | 1 | 1 | 1 | 1 | Horizontal 2X T-shape (right) |

Table 17B

| Bin Coding Tree | | | | | Partition Type |
|---|---|---|---|---|---|
| Bin$_0$ | Bin$_1$ | Bin$_2$ | Bin$_3$ | Bin$_4$ | |
| 1 | N/A | N/A | N/A | N/A | Quad Tree Split |
| 0 | 0 | N/A | N/A | N/A | Leaf Node |
| 0 | 1 | 0 | 0 | N/A | Horizontal Symmetric Binary Tree |
| 0 | 1 | 0 | 1 | 0 | Top-Left 1/4 T |
| 0 | 1 | 0 | 1 | 1 | Bottom-Right 1/4 T |
| 0 | 1 | 1 | 0 | N/A | Vertical Symmetric Binary Tree |
| 0 | 1 | 1 | 1 | 0 | Left-Top 1/4 T |
| 0 | 1 | 1 | 1 | 1 | Left-Bottom 1/4 T |

It should be noted that in some examples, higher level signaling (e.g., slice level or a CU level flag) may be used to indicate whether the predefined shapes illustrated in Table 7, the predefined shapes illustrated in Table 17A, and/or the predefined shapes illustrated in Table 17B are used for partitioning.

It should be noted that in some examples the number of bins used for coding partitioning may depend on a combination of one or more of block width, block height, number of partitions that have occurred, the offset of partitions that allowed at the current node of partition tree and/or shapes of partitions allowed at the current node of partition tree. For example, referring to Table 17A-17B, in some examples, for binary strings where Bin0 to Bin3 have one of the following values: 0101 or 0111, the signaling of Bin4 may be dependent on whether the block size has a minimum number of samples. In these cases, when Bin4 is not signaled, a new type of partition may be assigned to the binary strings including Bin0 to Bin3 (e.g., if Bin4 is not signaled, 0111 in Table 17B may correspond to a vertical TT partition mode, etc.).

In one example, one or more of the following parameters: block height, block width, number of samples, and/or pre-determined number minimum number of samples for allowed partitions; may determine whether a syntax element value is inferred or explicitly signaled. For example, if the number of samples in the current block is smaller than a pre-determined number minimum number of samples for the set of allowed partitions then it is inferred that the current block is not partitioned any further.

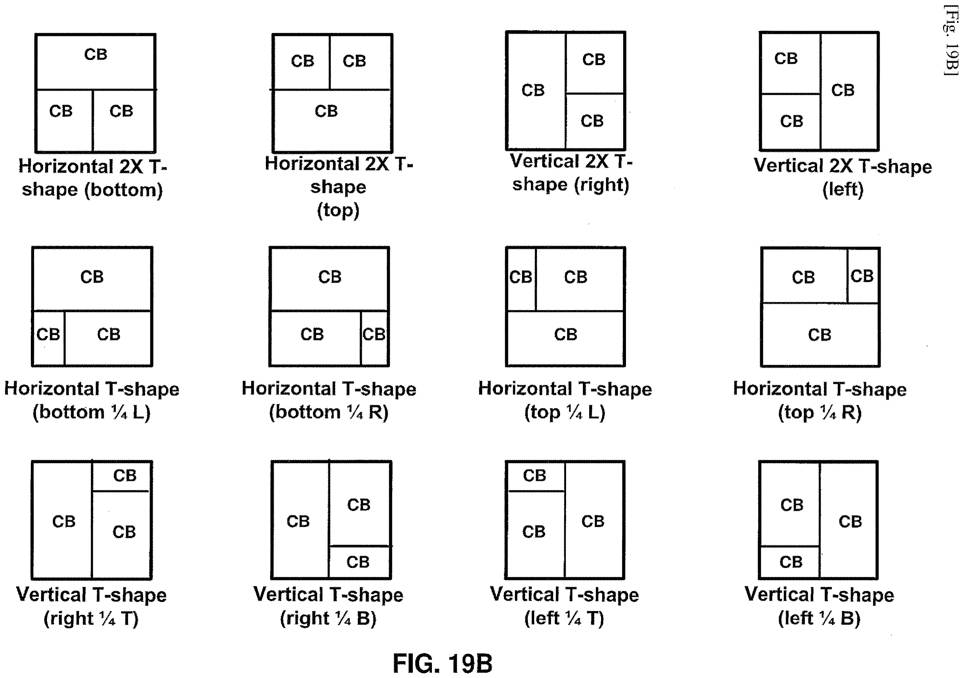

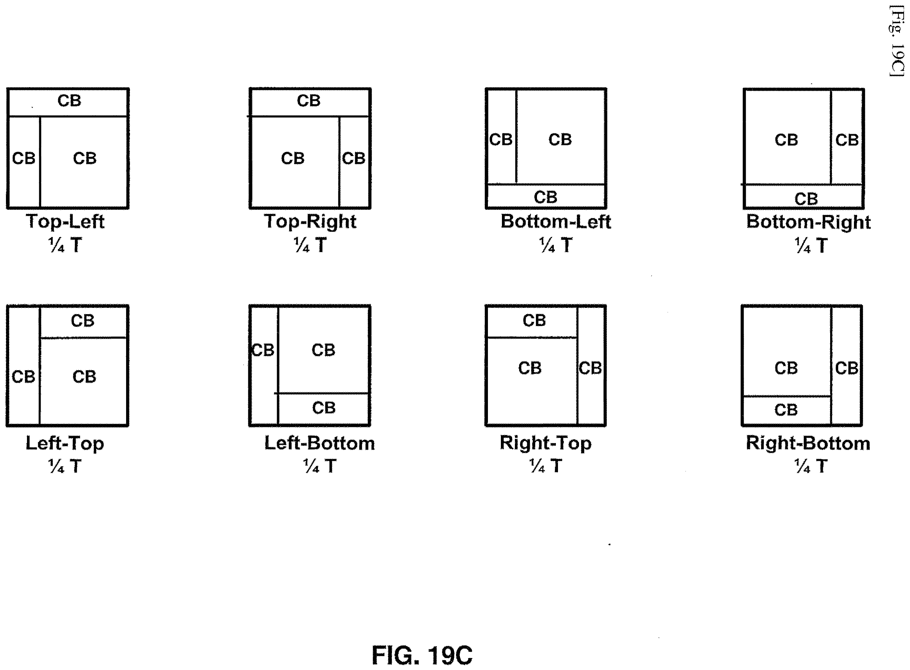

Referring to FIGS. 19B and 19C, it should be noted that T-shapes may be described as having an orientation. For example, a vertical 2X T-shape (left) may be described as a clockwise rotation of a horizontal 2X T-shape (bottom). Thus, in examples T-shapes, including predefined offsets and T-shapes with arbitrary offsets may be signaled as having an orientation (e.g., a one bit flag may indicate if a T-shape is rotated clockwise). Referring again to FIG. 17, in some examples, the values of Offset0 and/or Offset1 may depend on one or more of the width of a block, the height of a block, and/or an orientation value. In some examples, orientations that can be signaled may be limited to a subset of values. In some examples, the offsets may limited to a subset of values and the signaling changed appropriately for coding efficiency. For example, referring to vertical 2X T-shape (left) and horizontal 2X T-shape (bottom) in FIG. 19B, because the two configurations may be signaled using two successive BT partitions, in some cases is may be disadvantageous to signal the configurations using orientations values and offset. Further, it should be noted that in some cases, particular T-shape partitions may be disallowed for a child node based on how sibling nodes are partitioned. For example, for a parent partitioned according to a QT, the available partitions for each of the four children nodes may depend on one another. That is, inefficient/redundant partitions may be disallowed. In an example, QT partition may be disallowed for all or subset of descendants in the partition tree of a node that used BT partitioning. In an example, QT partition may be disallowed for all or subset of descendants in the partition tree of a node that used TT partitioning. In an example, QT partition may be disallowed for all or subset of descendants in the partition tree of a node that used T-shaped partitioning. In an example, BT partition may be disallowed for all or subset of descendants in the partition tree of a node that used T-shape partitioning.

Further, in some examples, a partition constructed by combining N or more successive types of particular partitions may be disallowed. For example, for a square block, QT may be constructed by combining a 2X T-tree and a BT split. Signaling may be configured to not allow generation of a QT by successively signaling a 2X T-tree and a BT split combination.

In an example, if for the first case there are two successive partitions of type (Horizontal, Offset0) and (Vertical, Offset1) and for the second case there are two successive partitions of type (Vertical, Offset1) and (Horizontal, Offset0) then one of the cases is not allowed. The signaling of partitions may be appropriately modified to account for one of the cases not being allowed. In an example Offset1 may correspond to (width - Offset0).

In one example, only one of Left-Top 1/4 T and Top-Left 1/4 T partitioning may be allowed. In one example, only one of Left-Bottom 1/4 T and Bottom-Left 1/4 T partitioning may be allowed. In one example, only one of Right-Top 1/4 T and Top-Right 1/4 T partitioning may be allowed. In one example, only one of Right-Bottom 1/4 T and Bottom-Right 1/4 T partitioning may be allowed. The signaling of partitions may be appropriately modified to account for one of the partitions not being allowed.

In one example, (Left-Top 1/4 T, Left-Bottom 1/4 T, Right-Top 1/4 T, Right-Bottom 1/4 T) partitioning is allowed while (Top-Left 1/4 T, Bottom-Left 1/4 T, Top-Right 1/4 T, Bottom-Right 1/4 T) is not allowed and the partition signaling is modified, for example, as illustrated in Table 18.

Table 18

| Bin Coding Tree | | | | | Partition Type |
|---|---|---|---|---|---|
| $Bin_0$ | $Bin_1$ | $Bin_2$ | $Bin_3$ | $Bin_4$ | |
| 1 | N/A | N/A | N/A | N/A | Quad Tree Split |
| 0 | 0 | N/A | N/A | N/A | Leaf Node |
| 0 | 1 | 0 | 0 | N/A | Horizontal Symmetric Binary Tree |
| 0 | 1 | 0 | 1 | 0 | Left-Top 1/4 T |
| 0 | 1 | 0 | 1 | 1 | Left-Bottom 1/4 T |
| 0 | 1 | 1 | 0 | N/A | Vertical Symmetric Binary Tree |
| 0 | 1 | 1 | 1 | 0 | Right-Top 1/4 T |
| 0 | 1 | 1 | 1 | 1 | Right-Bottom 1/4 T |

As described above, other types of partition shapes (e.g., a subset of those illustrated in FIGS. 19A-19C) may be signaled using a bin coding. Tables 19A-19B illustrate examples of bin coding signaling used for signaling QT partitioning, symmetric BT partitioning, TT partitioning, and asymmetric 1/4 BT partitioning according to the techniques described herein. It should be noted that in the examples illustrated in Tables 19A-19B, the TT partitioning may include 1/4 TT partitioning in some examples and 1/3 TT partitioning in other examples.

Table 19A

| Bin Coding Tree | | | | | | Partition Type |
|---|---|---|---|---|---|---|
| $Bin_0$ | $Bin_1$ | $Bin_2$ | $Bin_3$ | $Bin_4$ | $Bin_5$ | |
| 1 | N/A | N/A | N/A | N/A | N/A | Quad Tree Split |
| 0 | 0 | N/A | N/A | N/A | N/A | Leaf Node |
| 0 | 1 | 0 | 0 | N/A | N/A | Horizontal TT |
| 0 | 1 | 0 | 1 | 0 | N/A | Horizontal Symmetric Binary Tree |
| 0 | 1 | 0 | 1 | 1 | 0 | Horizontal 1/4 of block dimension top (Hor_Top) |
| 0 | 1 | 0 | 1 | 1 | 1 | Horizontal 1/4 of block dimension right (Hor_Bottom) |
| 0 | 1 | 1 | 0 | N/A | N/A | Vertical TT |
| 0 | 1 | 1 | 1 | 0 | N/A | Vertical Symmetric Binary Tree |
| 0 | 1 | 1 | 1 | 1 | 0 | Vertical 1/4 of block dimension left (Ver_Left) |
| 0 | 1 | 1 | 1 | 1 | 1 | Vertical 1/4 of block dimension right (Ver_Right) |

Table 19B

| Bin Coding Tree | | | | | | Partition Type |
|---|---|---|---|---|---|---|
| $Bin_0$ | $Bin_1$ | $Bin_2$ | $Bin_3$ | $Bin_4$ | $Bin_5$ | |
| 1 | N/A | N/A | N/A | N/A | N/A | Quad Tree Split |
| 0 | 0 | N/A | N/A | N/A | N/A | Leaf Node |
| 0 | 1 | 0 | 0 | N/A | N/A | Horizontal Symmetric Binary Tree |
| 0 | 1 | 0 | 1 | 0 | N/A | Horizontal TT |
| 0 | 1 | 0 | 1 | 1 | 0 | Horizontal 1/4 of block dimension top (Hor_Top) |
| 0 | 1 | 0 | 1 | 1 | 1 | Horizontal 1/4 of block dimension right (Hor_Bottom) |
| 0 | 1 | 1 | 0 | N/A | N/A | Vertical Symmetric Binary Tree |
| 0 | 1 | 1 | 1 | 0 | N/A | Vertical TT |
| 0 | 1 | 1 | 1 | 1 | 0 | Vertical 1/4 of block dimension left (Ver_Left) |
| 0 | 1 | 1 | 1 | 1 | 1 | Vertical 1/4 of block dimension right (Ver_Right) |

As described above, in some cases, redundant and/or inefficient signaling may be disallowed. As described above, in some examples, when a signaling combination is not allowed, a bin value may not be included in a bitstream and a decoder may infer a partitioning type. For example, when all BT offsets, after rounding, result in the same partitioning, then an offset does not have to be signaled and the decoder may infer the correct offset. Further, in another example, in the case where a 12xN block may be partitioned into (4xN, 8xN) or (8xN, 4xN) BT partition, and may not be partitioned into a (3xN, 6xN, 3xN) TT partition (e.g., because 3 and 6 are not a multiples of 4) signaling indicating one of a BT or TT partition is not needed and the decoder may infer the correct partitioning. For example, referring to Table 19A, in this case, where TT partitioning is not allowed the value of bin 3 may be inferred to be 1.

In one example, for TT partitioning and BT partitioning (symmetric or asymmetric), including for example, the TT partitioning and BT partitioning illustrated in Tables 19A-19B, whether a TT partitioning and/or a BT partitioning is allowed may be based on one or more of: the block size, the frame and/or slice prediction type (i.e., intra or inter), a predetermined threshold which may be compared to a block size or a block dimension (e.g., block height or width greater than predetermined threshold X), and/or the minimum CU size of the frame. It should be noted that in some examples, a threshold may be determined based on properties of video data.

Further, in one example, if minPartSize denotes the minimum allowed CU size of a frame and/or slice, then one or more of the following rules may be applied to for TT partitioning and BT partitioning for the examples illustrated in Tables 19A-19B: (1) if a CU Size <= 2*minPartSize, do not allow symmetric BT or asymmetric 1/4 BT; (2) if a CU Size <= 2*minPartSize and a CU is included in an intra frame, do not allow TT; and (3) if a CU Size < 2*minPartSize and a CU is included in an inter frame, do not allow TT.

As described above, in some examples partitioning of luma and chroma components may be independent or dependent up to a particular depth. In one example, an inter slice may use a common partitioning tree for both luma and chroma components for all blocks (e.g. PU, CU, TU, CTU). In one example, a video block in an inter slice may use independent partitioning trees for luma and chroma components based on a prediction mode (e.g., intra predicted blocks may use independent partitioning tree). In one example, a block in an inter slice may use partially independent partitioning tree based on a prediction mode (e.g., partitioning tree is shared starting from the root up to a depth based on a prediction mode).

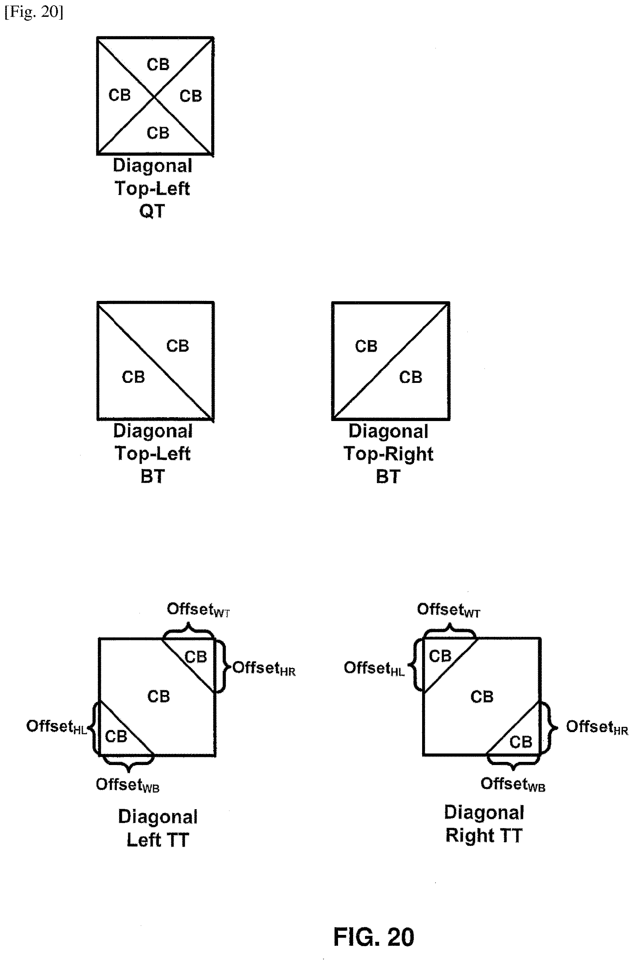

Further, in some examples, video encoder 200 may be configured to partition video blocks according to other predefined shapes. FIG. 20 illustrates examples of predefined shapes that may be signaled according to the techniques described herein. The shapes in FIG. 20 may be referred to as diagonal partitioning shapes. In the example illustrated in FIG. 20, samples on the diagonal boundary may be included in one of the partitions. Referring to FIG. 20, with respect to the diagonal TT partition shapes, offsets (OffsetWT, OffsetWB, OffsetHR, and OffsetHB) may in some examples be signaled and in some examples, be predetermined, in a similar manner to offsets described above. In one example, OffsetWT and OffsetWB may be equal and/or OffsetHL and OffsetHR may be equal and if signaled, may be signaled as a single value. Further, in one example, OffsetWT and OffsetWB may be equal to w/sqrt(2) and/or OffsetHL and OffsetHR may be equal to h/sqrt(2), where sqrt(2) returns the square root of 2 and the resulting offset is rounded to an integer. In some examples, rounding may include rounding to the nearest multiple (e.g., 64/sqrt(2) may be rounded to the nearest multiple of 4, 44). In some examples, rounding of any of the partition offsets described herein may include rounding to a power of 2. It should be noted that in some examples, for diagonal TT partition shapes, offsets may be determined such that the area of the center partition is equal to the sum or the area of the corner partitions. In other examples, other relationships between the partition areas may be defined. It should be noted that the diagonal partitioning structures illustrated in FIG. 20 may be signaled in a similar manner as provided above with respect to QT, BT, and TT partitions, e.g., according to a bin coding tree.

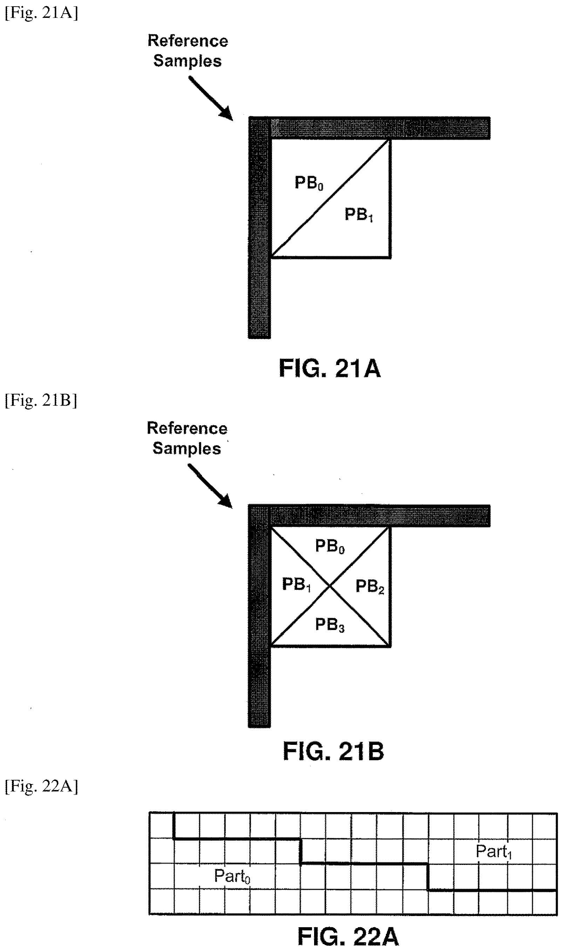

In one example, for diagonal partitioning, a transform may be carried out over the rectangular and/or square block that was partitioned and not the partitioned diagonal partitions. For example, diagonal partitioning may be used for PUs and not TUs. In one example, the transform partitioning tree may be an independent of a partitioning tree using diagonal partitions and may include rectangular and/or square blocks. In one example, a diagonal partitioning may always result in a leaf node (i.e., not be split further). In this case, additional bins need not be signaling in a bitstream. As described above, in some examples, diagonal partitioning may be used for PUs, in one example, for intra mode prediction, each node resulting from a diagonal partitioning may be a PB and as such, may have a separate intra-mode. It should be noted however, in some examples, the set of reference samples used for the PU may be the same. FIGS. 21A-21B illustrate examples, where diagonal partitions result in PBs.

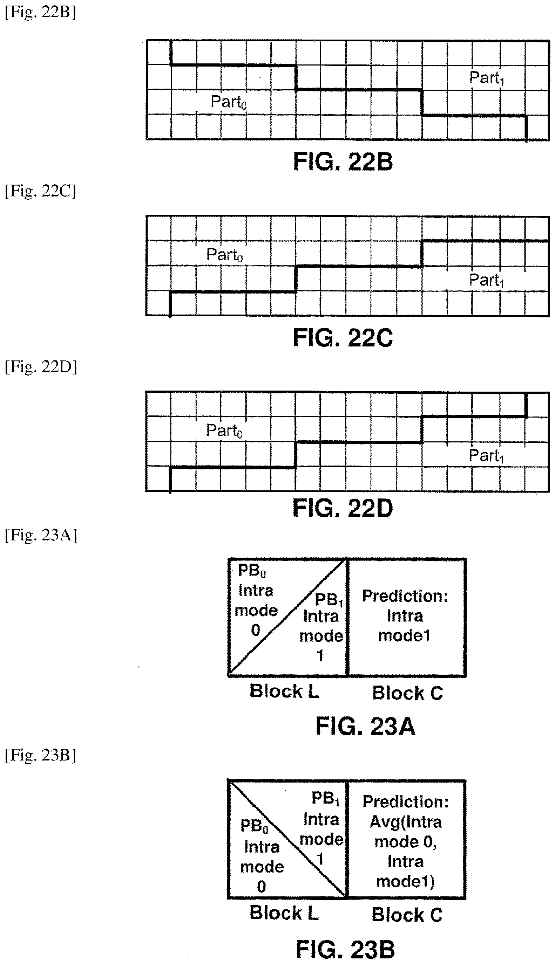

As described above, for diagonal partitions, samples on the diagonal boundary may be included in one of the partitions. With respect to diagonal top-left BT and diagonal top-right BT, in one example, the BT partitions may be defined such that the leftmost column of samples is included in one of the partitions. As described above, a node to be partitioned may include a rectangular node. FIGS. 22A-22D illustrate examples where rectangular nodes (i.e., 16x4 nodes) are partitioned according to diagonal top-left BT and diagonal top-right BT shapes. As illustrated in the example of FIGS. 22A-22D, partitions are referred to as Part0 and Part1. Part0 and Part1 may generally refer to each of the partitions resulting from a diagonal BT partitioning. It should be noted that in each of the examples illustrated in FIGS. 22A-22D, Part0 includes the leftmost column of samples. Further, FIG. 22A illustrates an example where Part0 includes the bottom-right sample and FIG. 22B illustrates an example where Part1 includes the bottom-right sample. In a similar manner, FIG. 22C illustrates an example where Part0 includes the top-right sample and FIG. 22D illustrates an example where Part1 includes the top-right sample. Thus, in different examples, Part0 and Part1 may include different samples of a parent node. Further, it should be noted with respect to the examples illustrated in FIGS. 22A-22D, Part0 and Part1 do not include the same number of samples, for example, in FIG. 22A, Part0 includes 34 samples and Part1 includes 30 samples and in FIG. 22B, Part0 includes 33 samples and Part1 includes 31 samples. It should be noted that in other examples, diagonal top-left BT and diagonal top-right BT shapes may be defined such that Part0 and Part1 include the same number of samples (i.e., 32 for 16x4 root nodes) or different samples than those illustrated in the examples of FIGS. 22A-22D. Further, it should be noted that in some examples, diagonal top-left BT and diagonal top-right BT shapes may be defined such that Part0 includes a bottom-most row (e.g., for diagonal top-left BT) or a top-most row (e.g., for diagonal top-right BT).

As described above with respect to FIGS. 21A-21B, in some examples, for intra prediction, each node resulting from a diagonal partitioning may be assigned a separate prediction mode (e.g., each node resulting from a diagonal partitioning may be a PB). Intra prediction modes available to be selected and/or a particular prediction mode that is selected for PBs resulting from diagonal partitioning may be based on one or more of the techniques described herein. Further, intra prediction modes available to be selected and/or a particular prediction mode that is selected for blocks neighboring PBs resulting from diagonal partitioning may be based on one or more of the techniques described herein.

For example, with respect to diagonal top-left BT and diagonal top-right BT shapes, in some examples, according to the techniques described herein, video encoder 200 may be configured such that the same intra prediction mode is not allowed to be used for both parts (e.g., an angular prediction mode used for Part1 cannot equal the angular prediction mode used for Part0). In some examples, according to the techniques described herein, video encoder 200 may be configured such that only particular combinations of intra prediction modes may be allowed Part0 and Part1. Table 20 illustrates examples of combinations of intra prediction modes that may be allowed Part0 and Part1. With respect to Table 20, it should be noted that in some examples the Any Angular entry may be replaced with a subset of possible angular prediction modes or may include all available predictions modes (or a subset thereof) other than the planar or DC prediction mode specified for the other partition.

Table 20

| | Part$_0$ Intra Prediction Mode | Part$_1$ Intra Prediction Mode |
|---|---|---|
| Combination 1 | Planar | Any Angular |
| Combination 2 | Any Angular | Planar |
| Combination 3 | DC | Any Angular |
| Combination 4 | Any Angular | DC |
| Combination 5 | Planar | DC |

(continued)

|  | Part$_0$ Intra Prediction Mode | Part$_1$ Intra Prediction Mode |
|---|---|---|
| Combination 6 | DC | Planar |

In one example, a subset or combinations illustrated in Table 20 may be available for selection. For example, in one example, one of combination 1, combination 2, combination 3, and combination 4 may be selected for intra prediction of Part0 and Part1. In one example, one of combination 5 and combination 6 may be selected for intra prediction of Part0 and Part1. In one example, the combinations that are available for selection may be based on one or more of the diagonal BT type (top-left or top-right), the size of the root/parent node, and/or the shape of the root/parent node.

In one example, the respective predictions resulting from the prediction mode selected for Part0 and the prediction mode selected for Part1 may be combined according to a weighing mask. Combining predictions according to a weighing mask may facilitate a smooth transition along the diagonal partition boundary in reconstructed video. In one example, the weighing may be dependent on the sample location, distance to the reference samples, and/or prediction modes selected for of each partition. In one example, the weighing may be dependent on the sample location and/or distance from the partition boundary. Further, in one example, a combined prediction may be formed using two intra prediction modes. In one example, the combined prediction may be a linear combination of the form:

$$\text{Prediction} = \text{weight}_0 * \text{prediction}_{\text{Part0}} + (1 - \text{weight}_0) * \text{prediction}_{\text{Part1}}$$

where $\text{weight}_0$ lies between 0 and 1;

$\text{prediction}_{\text{Part0}}$ is the prediction generated for Part$_0$; and

$\text{prediction}_{\text{Part1}}$ is the prediction generated for Part$_1$.

In one example, weight0 may be determined based on the distance of a sample being predicted from the reference sample(s) being used in the prediction. In one example, weight0 may be determined based on a set of distance, S. In one example, the set S may correspond to subset of distances (e.g. Euclidean distance) of the sample being predicted from the reference samples being used in the prediction.

In ITU-T H.265, for a current prediction block, one of the 35 possible intra prediction modes may be derived by using an intra prediction mode from a neighboring intra predicted prediction unit. In ITU-T H.265, an intra prediction mode may be derived from a neighboring intra predicted prediction unit by generating a list of Most Probable Modes (MPMs) and signaling an index value corresponding to an entry in the list. In one example, according to the techniques described herein, for PBs resulting from a diagonal partitioning and/or neighboring block thereof, an intra-mode prediction may be derived by inferring an intra prediction mode from a neighboring block.

Referring to FIG. 23A, in the example illustrated in FIG. 23A, block C is the current coding block and block C inherits an intra prediction mode used for one of the PBs included in its left neighboring block, block L (the intra prediction mode used for PB1 in this case). With respect to FIG. 23A, in one example, the intra prediction mode used for PB0 and the intra prediction mode used for PB1 may be included in a list of MPMs for block C and video encoder 200 may select one of the MPMs and signal a corresponding index value. Further, in one example, one of the intra prediction mode used for PB0 and the intra prediction mode used for PB1 may be inferred for block C and thus, an index value does not need to be signaled by video encoder 200 to a corresponding video decoder. In one example, the inference of one of the intra prediction mode used for PB0 or the intra prediction mode used for PB1 may be based on the diagonal partitioning shape used for block L (e.g., the mode of PB1 may be inferred for diagonal top-right BT and the mode of PB0 may be inferred for diagonal top-left BT). In a similar manner, a list of MPMs and corresponding index values assigned to candidate prediction modes may be based on the diagonal partitioning shape used for block L.

In other examples, a prediction mode of block C may be a function of the intra prediction modes used for PBs resulting from a diagonal partitioning in a neighboring block. For example, as illustrated in FIG. 23B, the prediction mode for block C may be the average of the intra prediction mode used for PB0 in block L and the intra prediction mode used for PB1 in block L. In one example, whether a neighboring block inherits a prediction mode from a PB in a neighboring block, determines a prediction mode using a function of prediction modes used in a neighboring block, and/or uses a particular function (e.g., uses an average function or another function) may be based on the diagonal partitioning shape used for the neighboring block. For example, referring to the examples illustrated in FIG. 23A and FIG. 23B, in the case where block L is partitioned using diagonal top-right BT, block C may inherit the prediction mode from PB1 (as illustrated in FIG. 23A) and in the case where block L is partitioned using diagonal top-left BT, the prediction mode of block C may be the average of the prediction mode of PB 1 and PB2.

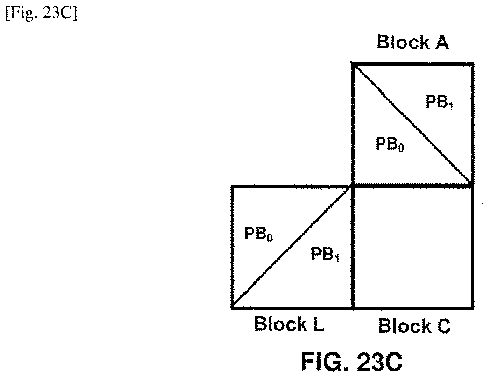

Further, in one example, whether a neighboring block inherits a prediction mode from a PB in one of several possible neighboring blocks, determines a prediction mode using a function of prediction modes used in a one or more neighboring blocks, uses a particular function (e.g., uses an average function or another function), and/or generates a particular list of MPMs may be based on the diagonal partitioning shapes used for one or more neighboring blocks. For example, referring to FIG. 23C, neighboring blocks block A and block L are adjacent to block C. In one example, video encoder 200 may be configured such that block C inherits a prediction mode from one of PB0 in block A or PB1 in block L. Further, in one example, video encoder 200 may be configured to generate a list of MPMs based on the diagonal partitioning shapes used for one or more neighboring blocks. In one example, when one or more neighboring rectangular blocks are partitioned according to a diagonal partitioning shape (e.g., block A and block L in FIG. 23C), a list of MPMs may be generated according to one or more of the following techniques: (1) prediction modes for each of the diagonal partitions may be added to a list of MPMs (e.g., in FIG. 23C prediction modes for PB0 and PB1 in block A and PB0 and PB1 in block L may be added to list of MPMs); and/or (2) a respective prediction mode for each of the neighboring blocks may be added to a list of MPMs. A respective prediction mode for a neighboring block may include a selected prediction mode from one of the diagonal PBs in a rectangular block (e.g., the prediction mode used for one of PB0 or PB1 in block L may be added to a MPMs list) or may include a function of prediction modes for diagonal PBs in a rectangular block (e.g., the prediction modes for PB0 and PB1 in block L may be averaged and the average value may be included in a list of MPMs). In one example, selecting a prediction mode from one of the diagonal PBs in a rectangular block may include selecting the intra prediction mode of the closest (e.g., in terms of average sample distance) PB to the block being coded. It should be noted that such a selection would make the selection dependent on the shape of the partition and the location of the neighboring block with respect to current block.

As described above, intra prediction modes available to be selected and/or a particular prediction mode that is selected for PBs resulting from diagonal partitioning may be constrained. In one example, video encoder 200 may be configured such that particular prediction modes are not included in a list of MPMs. For example, in one example, video encoder 200 may be configured such that Part1 will not be allowed to use the intra prediction mode used for Part0. In this case, were a prediction mode is unavailable for Part1 signaling of possible prediction modes for Part1 may be simplified to be based on the reduced set of possible prediction modes. For example, the process of generating a MPM list and a non-MPM list for Part1 may account for the intra mode used for Part0 not being a possible prediction mode. In one example, binarization of the non-MPM list index in this case may be modified to account for one fewer possible prediction modes. Further, it should be noted that in some examples, video encoder 200 may be configured such that Part1 will not be allowed to use angular intra prediction modes neighboring an angular prediction mode used for Part0. For example, if Part0 uses a vertical angular prediction (e.g., mode index 26 in ITU-T H.265), Part1 may not be allowed to use angular prediction modes within a specified angle of the vertical angular prediction (e.g., not allowed to use mode indices 22-26 in ITU-T H.265). Reducing the allowed prediction modes in this manner may further improve the efficiency of binarization with respect to signaling prediction mode indices.

As described above, in some examples, a transform partitioning tree may be independent of a prediction partitioning tree using diagonal partitions and may include rectangular and/or square blocks. Further, there may be other coding processes that operate on rectangular and/or square blocks. In some cases, processes that operate on rectangular and/or square blocks may be a function of and/or dependent on an intra prediction mode. For example, whether a particular transform (or type of particular transform) is performed may be dependent on an intra prediction mode. Thus, in some cases, it may be useful to define an effective intra prediction mode for a rectangular and/or square blocks. For example, referring to FIG. 23A, in some cases, it may be useful to determine an effective prediction mode for block L. In one example, an effective intra prediction mode may be predetermined as a prediction mode of a particular diagonal partition of a block (e.g., one of the prediction mode Part0 or Part1 for diagonal BTs). In one example, an effective intra prediction mode may be determined based on which diagonal partition of a block includes the most samples. In one example, an effective intra prediction mode may be determined based on a function of intra prediction modes of one or more diagonal partitions of a block. According to the techniques described herein an effective intra prediction mode may be used for at least one or more of the following coding processes: selecting a secondary transform (NSST) from a group of transforms; selecting a coefficient scan index from a group of scan patterns; and in a so-called direct mode, for deriving an intra prediction mode for a chroma component from an effective prediction mode corresponding to a luma block.

Further, in other examples, one or more of the following coding processes may be based on an effective intra prediction mode: cross component prediction may be carried out if the effective intra mode is a direct mode; the signaling of a rotational transform (ROT) index may depend on the effective intra mode of a current block; coefficient sign data hiding may be avoided when the effective intra mode is a horizontal intra prediction mode and the current block uses residual differential pulse code modulation (RDPCM); coefficient sign data hiding may be avoided when an effective intra mode is a vertical intra prediction mode and the current block uses RDPCM; cross component prediction may be carried out if all partitions of a block (e.g., the two (Part0 and Part1) or three or more parts of a diagonally partitioned block) have intra prediction modes equal to direct mode; and/or coefficient sign data hiding may be avoided when diagonal partitioning is used and current block uses RDPCM.

In one example, when coding a diagonally partitioned intra coded block included in an inter slice, the different components (e.g., luma and chroma) may share the intra prediction mode signaling. Further, in one example, when coding a diagonally partitioned intra coded block included in an intra slice, the different components may not share the intra prediction mode signaling.

Referring again to FIG. 8, video encoder 200 may generate residual data by subtracting a predictive video block from a source video block. Summer 202 represents a component configured to perform this subtraction operation. In one example, the subtraction of video blocks occurs in the pixel domain. Transform coefficient generator 204 applies a transform, such as a discrete cosine transform (DCT), a discrete sine transform (DST), or a conceptually similar transform, to the residual block or sub-divisions thereof (e.g., four 8 x 8 transforms may be applied to a 16 x 16 array of residual values) to produce a set of residual transform coefficients. Transform coefficient generator 204 may be configured to perform any and all combinations of the transforms included in the family of discrete trigonometric transforms. As described above, in ITU-T H.265, TBs are restricted to the following sizes 4x4, 8x8, 16x16, and 32x32. In one example, transform coefficient generator 204 may be configured to perform transformations according to arrays having sizes of 4x4, 8x8, 16x16, and 32x32. In one example, transform coefficient generator 204 may be further configured to perform transformations according to arrays having other dimensions. In particular, in some cases, it may be useful to perform transformations on rectangular arrays of difference values. In one example, transform coefficient generator 204 may be configured to perform transformations according to the following sizes of arrays: 2x2, 2x4N, 4Mx2, and/or 4Mx4N. In one example, a 2-dimensional (2D) MxN inverse transform may be implemented as 1-dimensional (1D) M-point inverse transform followed by a ID N-point inverse transform. In one example, a 2D inverse transform may be implemented as a ID N-point vertical transform followed by a ID N-point horizontal transform. In one example, a 2D inverse transform may be implemented as a ID N-point horizontal transform followed by a ID N-point vertical transform. Transform coefficient generator 204 may output transform coefficients to coefficient quantization unit 206.

Coefficient quantization unit 206 may be configured to perform quantization of the transform coefficients. As described above, the degree of quantization may be modified by adjusting a quantization parameter. Coefficient quantization unit 206 may be further configured to determine quantization parameters and output QP data (e.g., data used to determine a quantization group size and/or delta QP values) that may be used by a video decoder to reconstruct a quantization parameter to perform inverse quantization during video decoding. It should be noted that in other examples, one or more additional or alternative parameters may be used to determine a level of quantization (e.g., scaling factors). The techniques described herein may be generally applicable to determining a level of quantization for transform coefficients corresponding to a component of video data based on a level of quantization for transform coefficients corresponding another component of video data.

As illustrated in FIG. 8, quantized transform coefficients are output to inverse quantization/transform processing unit 208. Inverse quantization/transform processing unit 208 may be configured to apply an inverse quantization and an inverse transformation to generate reconstructed residual data. As illustrated in FIG. 8, at summer 210, reconstructed residual data may be added to a predictive video block. In this manner, an encoded video block may be reconstructed and the resulting reconstructed video block may be used to evaluate the encoding quality for a given prediction, transformation, and/or quantization. Video encoder 200 may be configured to perform multiple coding passes (e.g., perform encoding while varying one or more of a prediction, transformation parameters, and quantization parameters). The rate-distortion of a bitstream or other system parameters may be optimized based on evaluation of reconstructed video blocks. Further, reconstructed video blocks may be stored and used as reference for predicting subsequent blocks.

As described above, a video block may be coded using an intra prediction. Intra prediction processing unit 212 may be configured to select an intra prediction mode for a video block to be coded. Intra prediction processing unit 212 may be configured to evaluate a frame and/or an area thereof and determine an intra prediction mode to use to encode a current block. As illustrated in FIG. 8, intra prediction processing unit 212 outputs intra prediction data (e.g., syntax elements) to entropy encoding unit 218 and transform coefficient generator 204. As described above, a transform performed on residual data may be mode dependent. As described above, possible intra prediction modes may include planar prediction modes, DC prediction modes, and angular prediction modes. Further, in some examples, a prediction for a chroma component may be inferred from an intra prediction for a luma prediction mode. Inter prediction processing unit 214 may be configured to perform inter prediction coding for a current video block. Inter prediction processing unit 214 may be configured to receive source video blocks and calculate a motion vector for PUs of a video block. A motion vector may indicate the displacement of a PU (or similar coding structure) of a video block within a current video frame relative to a predictive block within a reference frame. Inter prediction coding may use one or more reference pictures. Further, motion prediction may be uni-predictive (use one motion vector) or bi-predictive (use two motion vectors). Inter prediction processing unit 214 may be configured to select a predictive block by calculating a pixel difference determined by, for example, sum of absolute difference (SAD), sum of square difference (SSD), or other difference metrics. As described above, a motion vector may be determined and specified according to motion vector prediction. Inter prediction processing unit 214 may be configured to perform motion vector prediction, as described above. Inter prediction processing unit 214 may be configured to generate a predictive block using the motion prediction data. For example, inter prediction processing unit 214 may locate a predictive video block within a frame buffer (not shown in FIG. 8). It should be noted that inter prediction processing unit 214 may further be configured to apply one or more interpolation filters to a reconstructed residual block to calculate sub-integer pixel values for use in motion estimation. Inter prediction processing unit 214 may output motion prediction data for a calculated motion vector to entropy encoding unit 218. As illustrated in FIG. 8, inter prediction processing unit 214 may receive reconstructed video block via post filter unit 216. Post filter unit 216 may be configured to perform deblocking and/or Sample Adaptive Offset (SAO) filtering. Deblocking refers to the process of smoothing the boundaries of reconstructed video blocks (e.g., make boundaries less perceptible to a viewer). SAO filtering is a non-linear amplitude mapping that may be used to improve reconstruction by adding an offset to reconstructed video data.

Referring again to FIG. 8, entropy encoding unit 218 receives quantized transform coefficients and predictive syntax data (i.e., intra prediction data, motion prediction data, QP data, etc.). It should be noted that in some examples, coefficient quantization unit 206 may perform a scan of a matrix including quantized transform coefficients before the coefficients are output to entropy encoding unit 218. In other examples, entropy encoding unit 218 may perform a scan. Entropy encoding unit 218 may be configured to perform entropy encoding according to one or more of the techniques described herein. Entropy encoding unit 218 may be configured to output a compliant bitstream, i.e., a bitstream that a video decoder can receive and reproduce video data therefrom.

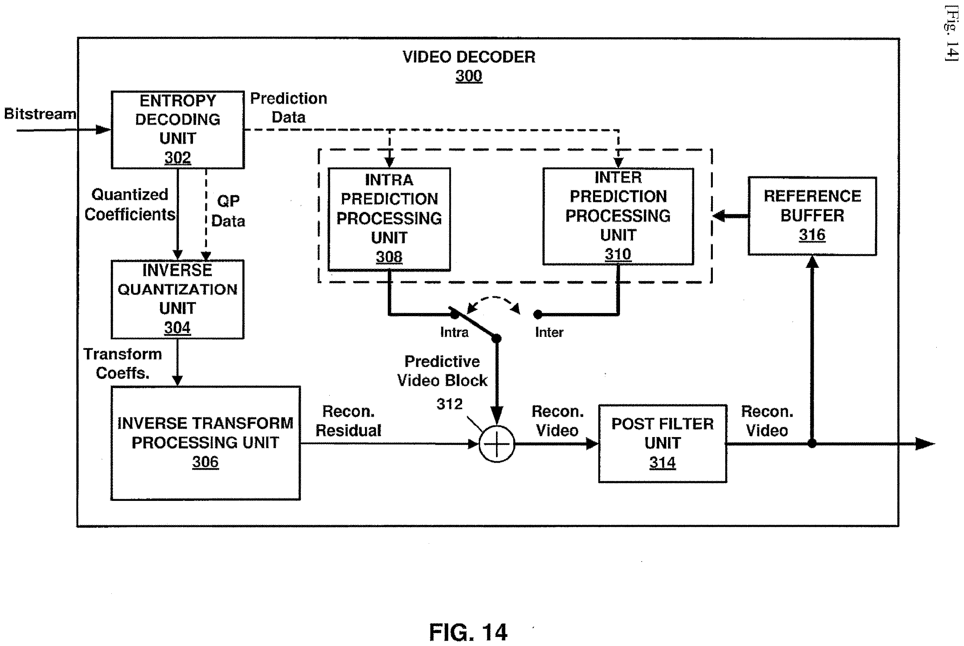

FIG. 14 is a block diagram illustrating an example of a video decoder that may be configured to decode video data according to one or more techniques of this disclosure. In one example, video decoder 300 may be configured to reconstruct video data based on one or more of the techniques described above. That is, video decoder 300 may operate in a reciprocal manner to video encoder 200 described above. Video decoder 300 may be configured to perform intra prediction decoding and inter prediction decoding and, as such, may be referred to as a hybrid decoder. In the example illustrated in FIG. 14 video decoder 300 includes an entropy decoding unit 302, inverse quantization unit 304, inverse transformation processing unit 306, intra prediction processing unit 308, inter prediction processing unit 310, summer 312, post filter unit 314, and reference buffer 316. Video decoder 300 may be configured to decode video data in a manner consistent with a video encoding system, which may implement one or more aspects of a video coding standard. It should be noted that although example video decoder 300 is illustrated as having distinct functional blocks, such an illustration is for descriptive purposes and does not limit video decoder 300 and/or sub-components thereof to a particular hardware or software architecture. Functions of video decoder 300 may be realized using any combination of hardware, firmware, and/or software implementations.

As illustrated in FIG. 14, entropy decoding unit 302 receives an entropy encoded bitstream. Entropy decoding unit 302 may be configured to decode quantized syntax elements and quantized coefficients from the bitstream according to a process reciprocal to an entropy encoding process. Entropy decoding unit 302 may be configured to perform entropy decoding according any of the entropy coding techniques described above. Entropy decoding unit 302 may parse an encoded bitstream in a manner consistent with a video coding standard. Video decoder 300 may be configured to parse an encoded bitstream where the encoded bitstream is generated based on the techniques described above. That is, for example, video decoder 300 may be configured to determine QTBT partitioning structures generated and/or signaled based on one or more of the techniques described above for purposes of reconstructing video data. For example, video decoder 300 may be configured to parse syntax elements and/or evaluate properties of video data in order to determine a shared depth of a QTBT. Further, video decoder 300 may be configured to determine an offset value and partition a block of video data according to the offset value.

Referring again to FIG. 14, inverse quantization unit 304 receives quantized transform coefficients (i.e., level values) and quantization parameter data from entropy decoding unit 302. Quantization parameter data may include any and all combinations of delta QP values and/or quantization group size values and the like described above. Video decoder 300 and/or inverse quantization unit 304 may be configured to determine QP values used for inverse quantization based on values signaled by a video encoder and/or through video properties and/or coding parameters. That is, inverse quantization unit 304 may operate in a reciprocal manner to coefficient quantization unit 206 described above. For example, inverse quantization unit 304 may be configured to infer predetermined values (e.g., determine a sum of QT depth and BT depth based on coding parameters), allowed quantization group sizes, and the like, according to the techniques described above. Inverse quantization unit 304 may be configured to apply an inverse quantization. Inverse transform processing unit 306 may be configured to perform an inverse transformation to generate reconstructed residual data. The techniques respectively performed by inverse quantization unit 304 and inverse transform processing unit 306 may be similar to techniques performed by inverse quantization/transform processing unit 208 described above. Inverse transform processing unit 306 may be configured to apply an inverse DCT, an inverse DST, an inverse integer transform, Non-Separable Secondary Transform (NSST), or a conceptually similar inverse transform processes to the transform coefficients in order to produce residual blocks in the pixel domain. Further, as described above, whether a particular transform (or type of particular transform) is performed may be dependent on an intra prediction mode. As illustrated in FIG. 14, reconstructed residual data may be provided to summer 312. Summer 312 may add reconstructed residual data to a predictive video block and generate reconstructed video data. A predictive video block may be determined according to a predictive video technique (i.e., intra prediction and inter frame prediction). In one example, video decoder 300 and the post filter unit 314 may be configured to determine QP values and use them for post filtering (e.g., deblocking). In one example, other functional blocks of the video decoder 300 which make use of QP may determine QP based on received signaling and use that for decoding.

Intra prediction processing unit 308 may be configured to receive intra prediction syntax elements and retrieve a predictive video block from reference buffer 316. Reference buffer 316 may include a memory device configured to store one or more frames of video data. Intra prediction syntax elements may identify an intra prediction mode, such as the intra prediction modes described above. In one example, intra prediction processing unit 308 may reconstruct a video block using according to one or more of the intra prediction coding techniques described herein. Inter prediction processing unit 310 may receive inter prediction syntax elements and generate motion vectors to identify a prediction block in one or more reference frames stored in reference buffer 316. Inter prediction processing unit 310 may produce motion compensated blocks, possibly performing interpolation based on interpolation filters. Identifiers for interpolation filters to be used for motion estimation with sub-pixel precision may be included in the syntax elements. Inter prediction processing unit 310 may use interpolation filters to calculate interpolated values for sub-integer pixels of a reference block. Post filter unit 314 may be configured to perform filtering on reconstructed video data. For example, post filter unit 314 may be configured to perform deblocking and/or SAO filtering, as described above with respect to post filter unit 216. Further, it should be noted that in some examples, post filter unit 314 may be configured to perform proprietary discretionary filter (e.g., visual enhancements). As illustrated in FIG. 14, a reconstructed video block may be output by video decoder 300. In this manner, video decoder 300 may be configured to generate reconstructed video data according to one or more of the techniques described herein. In this manner video decoder 300 may be configured to parse a first quad tree binary tree partitioning structure, apply the first quad tree binary tree partitioning structure to a first component of video data, determine a shared depth, and applying the first quad tree binary tree partitioning structure to a second component of video data up to the shared depth. In this manner, video decoder 300 represents an example of a device configured to determine an offset value and partition the leaf node according to the offset value.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Moreover, each functional block or various features of the base station device and the terminal device used in each of the aforementioned embodiments may be implemented or executed by a circuitry, which is typically an integrated circuit or a plurality of integrated circuits. The circuitry designed to execute the functions described in the present specification may comprise a general-purpose processor, a digital signal processor (DSP), an application specific or general application integrated circuit (ASIC), a field programmable gate array (FPGA), or other programmable logic devices, discrete gates or transistor logic, or a discrete hardware component, or a combination thereof. The general-purpose processor may be a microprocessor, or alternatively, the processor may be a conventional processor, a controller, a microcontroller or a state machine. The general-purpose processor or each circuit described above may be configured by a digital circuit or may be configured by an analogue circuit. Further, when a technology of making into an integrated circuit superseding integrated circuits at the present time appears due to advancement of a semiconductor technology, the integrated circuit by this technology is also able to be used.

Various examples have been described. These and other examples are within the scope of the following claims.

\<Cross Reference\>

This Nonprovisional application claims priority under 35 U.S.C. § 119 on provisional Application No. 62/452,868 on January 31, 2017, No. 62/465,135 on February 28, 2017, No. 62/466,976 on March 3, 2017, No. 62/478,362 on March 29, 2017, No. 62/491,884 on April 28, 2017, the entire contents of which are hereby incorporated by reference.

Support for the claims and further information is given in the following itemized list:

1. A method of partitioning video data for video coding, the method comprising:

   receiving a video block including sample values for a first component of video data and a second component of video data;
   partitioning the sample values for the first component of video data according to a first quad tree binary tree partitioning structure; and
   partitioning the sample values for the second component of video data according to the first quad tree binary tree partitioning structure up to a shared depth.

2. The method of item 1, further comprising signaling the first quad tree binary tree partitioning structure.

3. The method of any of items 1 or 2, wherein partitioning the sample values for the second component of video data further includes partitioning the sample values for the second component of video beyond the shared depth according to a second quad tree binary tree partitioning structure.

4. The method of item 3, further comprising signaling the second quad tree binary tree partitioning structure.

5. The method of any of items 1-4, further comprising signaling the shared depth.

6. A method of determining partitioning of video data for video coding, the method comprising:

   parsing a first quad tree binary tree partitioning structure;
   applying the first quad tree binary tree partitioning structure to a first component of video data;
   determining a shared depth; and
   applying the first quad tree binary tree partitioning structure to a second component of video data up to the shared depth.

7. The method of any of item 6, further comprising applying a second quad tree binary tree partitioning structure to a second component of video data beyond the shared depth.

8. The method of any of items 6 or 7, wherein determining the shared depth includes determining the shared depth based on a syntax element associated with the video data.

9. A method of partitioning a leaf node of video data for video coding, the method comprising:

determining an offset value; and
partitioning the leaf node according to the offset value.

10. The method of item 9, further comprising signaling the offset value.

11. The method of item 10, wherein signaling the offset value includes signaling an index value indicating the offset value.

12. The method of item 9, wherein determining an offset value includes parsing a syntax element.

13. The method of item 12, wherein parsing a syntax element includes parsing an index value indicating the offset value.

14. A method of partitioning a node of video data for video coding, the method comprising:

determining a partitioning type;
determining one or more offset values corresponding to the partitioning type; and
partitioning the node according to the one or more offset values.

15. The method of item 14, further comprising signaling the one or more offset values.

16. The method of item 15, wherein signaling the one or more offset values includes signaling an index value indicating the one or more offset values.

17. The method of item 14, wherein determining one or more offset values includes parsing a syntax element.

18. The method of item 17, wherein parsing a syntax element includes parsing an index value indicating the offset value.

19. The method of any of items 1-18, wherein a partitioning structure or partitioning type includes a diagonal partitioning.

20. The method of any of items 1-19, a diagonal partitioning is used to indicate prediction blocks.

21. A method of partitioning a node of video data for video coding, the method comprising:

partitioning the node according to a diagonal partitioning shape; and
determining a prediction mode for each of the partitions resulting from the diagonal partitioning shape.

22. The method of item 21, where determining a prediction mode for each of the partitions resulting from the diagonal partitioning includes determining a prediction mode for first partition from a set of available prediction modes and determining a prediction mode for a second partition mode from a reduced set of available prediction modes, wherein the reduced set of available prediction modes is reduced based on the prediction mode determined for first partition.

23. The method of any of items 21-22, further comprising generating a list of candidate prediction modes.

24. The method item 23, comprising generating index values for each of the prediction modes included the list of candidate prediction modes.

25. A device for coding video data, the device comprising one or more processors configured to perform any and all combinations of the steps of items 1-24.

26. The device of item 25, wherein the device includes a video encoder.

27. The device of item 25, wherein the device includes a video decoder.

28. A system comprising:

the device of item 26; and
the device of item 27.

29. An apparatus for coding video data, the apparatus comprising means for performing any and all combinations of the steps of items 1-24.

30. A non-transitory computer-readable storage medium comprising instructions stored thereon that, when executed, cause one or more processors of a device for coding video data to perform any and all combinations of the steps of items 1-24.

**Claims**

1. A method of determining partitioning of video data for video decoding, the method comprising:

   parsing a first partitioning structure, wherein the first partitioning structure is determined based on more than one of a plurality of partitioning types;
   applying the first partitioning structure to a first component of the video data;
   determining a shared depth; and
   applying the first partitioning structure to a second component of the video data up to the shared depth.

2. The method of claim 1, further comprising:
   applying a second partitioning structure to the second component of the video data beyond the shared depth.

3. The method of claim 2, wherein the first component of the video data is a luma component of the video data, the second component of the video data is a chroma component of the video data, the first partitioning structure is applied to the luma component of the video data, and the second partitioning structure is applied to the chroma component of the video data.

4. The method of claim 1, wherein determining the shared depth comprises determining the shared depth based on a syntax element associated with the video data.

5. The method of claim 1, wherein the first partitioning structure is a quad tree binary tree partitioning structure, and the plurality of partitioning types includes the quadtree partitioning type and a binary tree partitioning type.

6. The method of claim 1, wherein the first partitioning structure is determined based on a plurality of bin values received from a bitstream.

7. The method of claim 6, further comprising:

   determining a first bin value indicating whether a video block of the video data is partitioned according to a quadtree partitioning type;
   determining a second bin value indicating whether the video block is a leaf node;
   determining a third bin value indicating whether the video block is partitioned according to a horizontal partitioning mode or a vertical partitioning mode;
   determining a fourth bin value indicating that the video block is partitioned according to a triple tree partitioning type if a binary tree partitioning type is disallowed; and
   partitioning the video block according to the triple tree partitioning type.

8. The method of claim 7, wherein the first bin value, the second bin value, the third bin value and the fourth bin value are received from the bitstream.

9. The method of claim 7, wherein the fourth bin value excluded from the bitstream is inferred if the binary tree partitioning type is disallowed at a particular depth.

10. A method of partitioning video data for video coding, the method comprising:

   receiving sample values for a first component of the video data and a second component of video data;

partitioning the sample values for the first component of the video data according to a first partitioning structure, wherein the first partitioning structure is determined based on more than one of a plurality of partitioning types; and partitioning the sample values for the second component of the video data according to the first partitioning structure up to a shared depth.

11. The method according to claim 10, wherein partitioning the sample values for the second component of the video data comprises partitioning the sample values for the second component of the video data beyond the shared depth according to a second partitioning structure.

12. The method of claim 10, further comprising:

signaling the first partitioning structure;
signaling the second partitioning structure; and
signaling the shared depth.

13. The method of claim 10, wherein the first partitioning structure is a quad tree binary tree partitioning structure, and the plurality of partitioning type includes the quadtree partitioning type and a binary tree partitioning type.

14. The method of claim 10, further comprising:

determining a first bin value indicating whether a video block of the video data is partitioned according to a quadtree partitioning type;
determining a second bin value indicating whether the video block is a leaf node;
determining a third bin value indicating whether the video block is partitioned according to a horizontal partitioning mode or a vertical partitioning mode;
determining a fourth bin value indicating that the video block is partitioned according to a triple tree partitioning type if a binary tree partitioning type is disallowed; and
partitioning the video block according to the triple tree partitioning type,
wherein a plurality of bin values including the first bin value, the second bin value, the third bin value and the fourth bin value are signaled into a bitstream.

15. A device for determining partitioning of video data for video coding, the device comprising:
at least one processor; and
a storage device coupled to the at least one processor and storing a plurality of instructions which, when executed by the at least one processor, causes the at least one processor to perform the method of any of claims 1 to 14.

[Fig. 1]

FIG. 1

[Fig. 2]

FIG. 2

[Fig. 3]

CTU

CTB

CTB

| CB | CB | | |
|---|---|---|---|
| | CB | | |

CB CB

CB CB

CB CB

CB CB

CB CB CB

CB

CB CB

CB CB

CB CB

CB CB CB

CB CB

CB CB

CB CB

CB CB

CB CB

**LUMA QTBT**

**CHROMA QTBT**

## FIG. 3

EP 3 813 375 A1

38

[Fig. 4]

FIG. 4

[Fig. 5]

FIG. 5

[Fig. 6A]

**Current Block**

| 107 | 103 | 101 | 98 |
| 111 | 108 | 104 | 100 |
| 118 | 113 | 108 | 101 |
| 119 | 109 | 109 | 104 |

**Prediction**

| 99 | 93 | 90 | 92 |
| 101 | 93 | 92 | 92 |
| 97 | 94 | 90 | 88 |
| 109 | 98 | 100 | 91 |

**Subtraction**

**Residual**

| 8 | 10 | 11 | 6 |
| 10 | 15 | 12 | 8 |
| 11 | 19 | 18 | 13 |
| 10 | 11 | 9 | 13 |

**Transformation**

**Transform Coefficients**

| 184 | -11 | -6 | -11 |
| -26 | -5 | 6 | 13 |
| 8 | -9 | 6 | -9 |
| -26 | 13 | 6 | -5 |

**Scaling Factors**

| 5 | 5 | 6 | 6 |
| 5 | 5 | 6 | 6 |
| 6 | 6 | 7 | 7 |
| 6 | 6 | 7 | 7 |

**Quantization**

**Coefficient Level Values**

| 37 | -2 | -1 | -2 |
| -5 | -1 | 1 | 2 |
| 1 | -2 | 1 | -1 |
| -4 | 2 | 1 | -1 |

**To Bitstream**

# FIG. 6A

[Fig. 6B]

**From Bitstream**

↓

**Coefficient Level Values**

| 37 | -2 | -1 | -2 |
|----|----|----|----|
| -5 | -1 | 1 | 2 |
| 1 | -2 | 1 | -1 |
| -4 | 2 | 1 | -1 |

**Scaling Factors**

| 5 | 5 | 6 | 6 |
|---|---|---|---|
| 5 | 5 | 6 | 6 |
| 6 | 6 | 7 | 7 |
| 6 | 6 | 7 | 7 |

**Inverse Quantization**

↓ ↙

**Transform Coefficients**

| 185 | -10 | -6 | -12 |
|-----|-----|----|-----|
| -25 | -5 | 6 | 12 |
| 6 | -12 | 7 | -7 |
| -24 | 12 | 7 | -7 |

**Inverse Transformation**

↓

**Residual**

| 8 | 8 | 12 | 8 |
|---|---|----|---|
| 10 | 14 | 11 | 10 |
| 11 | 16 | 18 | 16 |
| 10 | 10 | 11 | 14 |

**Prediction**

| 99 | 93 | 90 | 92 |
|----|----|----|----|
| 101 | 93 | 92 | 92 |
| 97 | 94 | 90 | 88 |
| 109 | 98 | 100 | 91 |

**Addition**

↓ ↙

**Reconstruced Block**

| 107 | 101 | 102 | 100 |
|-----|-----|-----|-----|
| 111 | 107 | 103 | 102 |
| 108 | 110 | 108 | 104 |
| 119 | 108 | 111 | 105 |

# FIG. 6B

[Fig. 7]

**FIG. 7**

EP 3 813 375 A1

[Fig. 8]

**FIG. 8**

[Fig. 9]

FIG. 9

[Fig. 10]

FIG. 10

[Fig. 11]

EP 3 813 375 A1

FIG. 11

[Fig. 12]

FIG. 12

[Fig. 13]

FIG. 13

[Fig. 14]

FIG. 14

[Fig. 15]

**FIG. 15**

[Fig. 16]

FIG. 16

[Fig. 17]

FIG. 17

[Fig. 18]

EP 3 813 375 A1

CTB

CTB

Predefined BT, TT, and T-shape
partitions

Arbitrary Offsets enabled for
BT, TT, and T-shape partitions

**FIG. 18**

[Fig. 19A]

FIG. 19A

[Fig. 19B]

FIG. 19B

[Fig. 19C]

FIG. 19C

[Fig. 20]

Diagonal
Top-Left
QT

Diagonal
Top-Left
BT

Diagonal
Top-Right
BT

Diagonal
Left TT

Diagonal
Right TT

FIG. 20

[Fig. 21A]

Reference
Samples

**FIG. 21A**

[Fig. 21B]

Reference
Samples

**FIG. 21B**

[Fig. 22A]

**FIG. 22A**

[Fig. 22B]

**FIG. 22B**

[Fig. 22C]

**FIG. 22C**

[Fig. 22D]

**FIG. 22D**

[Fig. 23A]

**FIG. 23A**

[Fig. 23B]

**FIG. 23B**

[Fig. 23C]

FIG. 23C

Europäisches
Patentamt

European
Patent Office

Office européen
des brevets

# EUROPEAN SEARCH REPORT

Application Number

EP 20 21 4703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/195199 A1 (GUO LIWEI [US] ET AL) 1 August 2013 (2013-08-01) | 1-6, 10-12,15 | INV.<br>H04N19/70 |
| Y | * paragraph [0052] - paragraph [0054] *<br>* paragraph [0076] - paragraph [0081] *<br>----- | 7-9,13, 14 | H04N19/96<br>H04N19/186<br>H04N19/176 |
| X | WO 2017/008263 A1 (MEDIATEK SINGAPORE PTE LTD [SG]; ZHANG KAI [CN]; AN JICHENG [CN]) 19 January 2017 (2017-01-19) | 1-6, 10-12,15 | H04N19/11<br>H04N19/119 |
| Y | * paragraph [0008] - paragraph [0016] *<br>----- | 7-9,13, 14 | |
| X | J. CHEN ET AL:  "Algorithm Description of Joint Exploration Test Model 3", JOINT VIDEO EXPLORATION TEAM (JVET) OF ITU-T SG 1 6 WP 3 ISO/IEC JTC 1/SC 29/WG 11, JVET-C1001, 1 June 2016 (2016-06-01), pages 1-38, XP055598154, | 1,10,15 | |
| A | * section 2.1.1; page 1, last paragraph - page 3, paragraph first *<br>----- | 2-9, 11-14 | |
| Y,D | LI X ET AL:  "Multi-Type-Tree", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); JVET-D0117R1, JVET, CHENGDU, CN<br>,<br>vol. JVET-D0117r1, no. JVET-D0117r1 20 October 2016 (2016-10-20), XP030150367, Retrieved from the Internet: URL:http://phenix.int-evry.fr/jvet/ * paragraph [02.1] - paragraph [02.2] *<br>----- | 7-9 | |

**TECHNICAL FIELDS SEARCHED (IPC)**

H04N

The present search report has been drawn up for all claims

| Place of search | Date of completion of the search | Examiner |
|---|---|---|
| Munich | 13 January 2021 | Vaquero, Raquel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 4703

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2021

| Patent document cited in search report | | Publication date | Patent family member(s) | | Publication date |
|---|---|---|---|---|---|
| US 2013195199 | A1 | 01-08-2013 | CN 104081777 A | | 01-10-2014 |
| | | | EP 2810437 A2 | | 10-12-2014 |
| | | | JP 6162150 B2 | | 12-07-2017 |
| | | | JP 2015508953 A | | 23-03-2015 |
| | | | KR 20140123978 A | | 23-10-2014 |
| | | | US 2013195199 A1 | | 01-08-2013 |
| | | | WO 2013116081 A2 | | 08-08-2013 |
| WO 2017008263 | A1 | 19-01-2017 | BR 112018000549 A2 | | 18-09-2018 |
| | | | CN 107836117 A | | 23-03-2018 |
| | | | EP 3298777 A1 | | 28-03-2018 |
| | | | US 2018213264 A1 | | 26-07-2018 |
| | | | WO 2017008263 A1 | | 19-01-2017 |
| | | | WO 2017008678 A1 | | 19-01-2017 |

EPO FORM P0459

For more details about this annex : see Official Journal of the European Patent Office, No. 12/82

**REFERENCES CITED IN THE DESCRIPTION**

**Patent documents cited in the description**

- US 62452868 B
- US 62465135 B
- US 62466976 B
- US 62478362 B
- US 62491884 B

**Non-patent literature cited in the description**

- **F. LE LÉANNEC et al.** Asymmetric Coding Units in QTBT. *4th Meeting: Chengdu,* 15 October 2016
- **LI et al.** Multi-Type-Tree. *4th Meeting: Chengdu,* 15 October 2016